(19) Europäisches Patentamt
European Patent Office
Office européen des brevets

(11) Numéro de publication : **0 500 629 B1**

(12) **FASCICULE DE BREVET EUROPEEN**

(45) Date de publication du fascicule du brevet : **12.01.94 Bulletin 94/02**

(51) Int. Cl.$^5$ : **A23L 1/236**

(21) Numéro de dépôt : **90916313.1**

(22) Date de dépôt : **24.10.90**

(86) Numéro de dépôt international : **PCT/FR90/00765**

(87) Numéro de publication internationale : **WO 91/06224 16.05.91 Gazette 91/11**

(54) **AGENT EDULCORANT DERIVANT DE L'ACIDE L-ASPARTIQUE OU L-GLUTAMIQUE; SON PROCEDE DE PREPARATION.**

(30) Priorité : **24.10.89 FR 8914236**

(43) Date de publication de la demande : **02.09.92 Bulletin 92/36**

(45) Mention de la délivrance du brevet : **12.01.94 Bulletin 94/02**

(84) Etats contractants désignés : **AT BE CH DE DK ES FR GB GR IT LI LU NL SE**

(56) Documents cités :
**EP-A- 0 107 597**
**EP-A- 0 195 731**
**EP-A- 0 338 946**
**US-A- 3 725 453**
**US-A- 3 775 460**
**PATENT ABSTRACTS OF JAPAN, vol.11, no. 361 (C-459)(2808), 25 November 1987, & JP-A-62 132847**
**PATENT ABSTRACTS OF JAPAN, vol. 12, No. 132 (C-490)(2979), 22 April 1988, & JP-A-62 252754**

(73) Titulaire : **NOFRE, Claude**
**119, Cours Albert Thomas**
**F-69003 Lyon (FR)**
Titulaire : **TINTI, Jean-Marie**
**5, impasse de la Drelatière**
**F-69680 Chassieu (FR)**

(72) Inventeur : **NOFRE, Claude**
**119, Cours Albert Thomas**
**F-69003 Lyon (FR)**
Inventeur : **TINTI, Jean-Marie**
**5, impasse de la Drelatière**
**F-69680 Chassieu (FR)**

(74) Mandataire : **Hubert, Philippe et al**
**Cabinet Beau de Loménie 158, rue de l'Université**
**F-75340 Paris Cédex 07 (FR)**

EP 0 500 629 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet un nouvel agent édulcorant dérivant de l'acide L-aspartique ou L-glutamique, ainsi que son procédé de préparation.

Ce nouvel agent édulcorant est particulièrement utile pour édulcorer des produits variés, et en particulier les boissons, notamment les boissons gazeuses, les aliments, les confiseries, les patisseries, chewing-gums, les produits d'hygiène et les articles de toilette, ainsi que les produits cosmétiques, pharmaceutiques et vétérinaires.

On sait que, pour être utilisable à l'échelle industrielle, un agent édulcorant doit posséder d'une part un pouvoir sucrant intense, permettant de limiter le coût d'utilisation, et d'autre part, une stabilité satisfaisante, c'est-à-dire compatible avec les conditions d'utilisation.

Dans le cas particulier des boissons gazeuses, qui représentent l'utilisation principale des agents édulcorants, il est très difficile d'obtenir une stabilité satisfaisante, d'autant plus que certaines de ces boissons ont la particularité d'être acides avec un pH généralement compris entre 2,5 et 3,5.

Dans les documents US-A-3.725.453 et 3.775.460, il a été décrit des agents édulcorants dérivant de l'acide L-aspartique, de formule générale suivante :

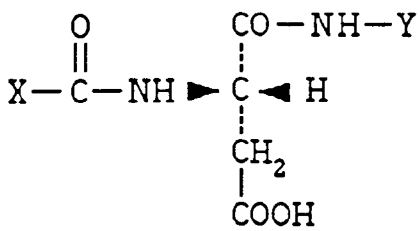

(A)

dans laquelle X est $CF_3$ ou $CCl_3$ et dans laquelle Y est 4-CN-$C_6H_4$, 4-Cl-$C_6H_4$, 4-Br-$C_6H_4$, 4-F-$C_6H_4$ ou $C_6H_5$. Le pouvoir sucrant de quelques uns de ces composés a été évalué (J. Med. Chem., 1973, 16 (2), p. 162-166). Par exemple, le composé de formule (1) (X = $CF_3$ et Y = 4-CN-$C_6H_4$) présente un pouvoir sucrant égal à 3000 fois celui du saccharose (par comparaison avec une solution de saccharose à 2 %) :

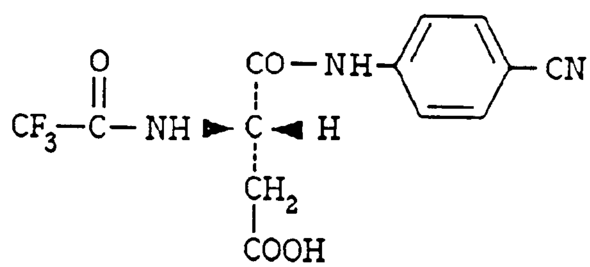

(1)

Les composés de formule générale (A), dans laquelle X = $CF_3$ et Y = 4-Cl-$C_6H_4$, 4-Br-$C_6H_4$ ou $C_6H_5$, ont un pouvoir sucrant plus faible que celui du composé de formule (1), compris entre 12 et 120 fois celui du saccharose.

Par ailleurs, il a été montré que le résidu L-aspartyl des composés précédents peut être remplacé par son homologue supérieur, le résidu L-glutamyle, sans modification appréciable des pouvoirs édulcorants (Naturwissenschaften, 1981, 68, 143).

Le document JP-A-87-132847 révéle généralement des agents édulcorants de formule générale :

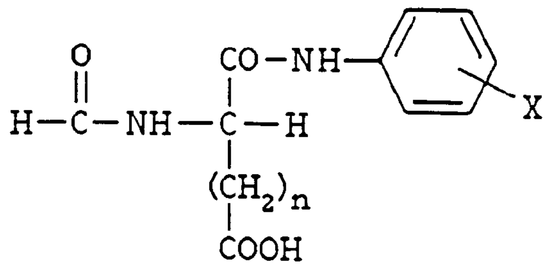

(B)

dans laquelle X est CN ou $NO_2$ et n est égal à 1 ou 2. Le composé le plus actif spécifiquement décrit de formule :

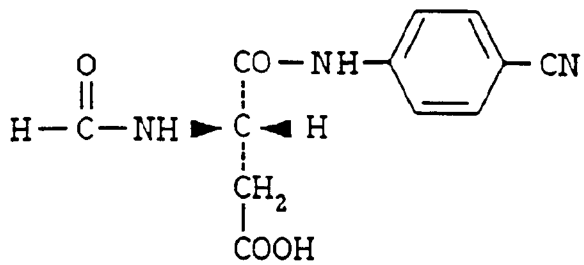

(2)

possède un pouvoir sucrant faible, évalué à 40 fois celui du saccharose.

Le document JP-A-87-132863 révéle généralement des édulcorants de formule générale :

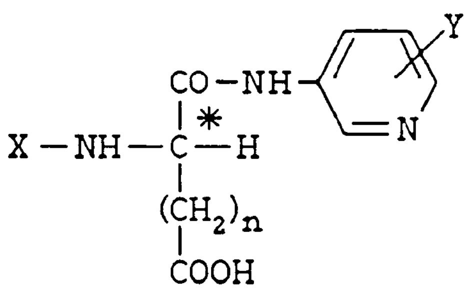

(C)

dans laquelle X est $CF_3CO$ ou $CCl_3CO$, Y est H, halogène, CN ou $NO_2$, n est égal à 1 ou 2, l'astérisque indiquant la possibilité d'une configuration L ou DL du résidu amino acide. Deux composés seulement sont spécifiquement décrits, dérivant de l'acide L-aspartique (n = 1) et dans lesquels Y = H et X = $CF_3CO$ et $CCl_3CO$ et leurs pouvoirs sucrants sont respectivement de 40 fois et 1 fois celui du saccharose.

Le document JP-A-87-252754 révéle généralement des édulcorants de formule générale :

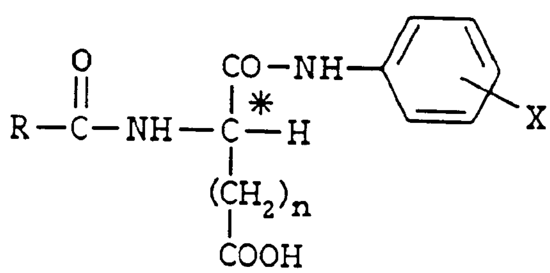

(D)

dans laquelle X est CN ou $NO_2$, R est H, ou un groupe alkyle en $C_1$-$C_{10}$, aromatique, alcoxy ou aryloxy, n est égal à 1 ou 2 et dans laquelle l'astérisque indique une configuration L ou DL du résidu amino acide.

Sur les 15 exemples spécifiquement décrits (Tableau 1), 14 composés sont des dérivés de l'acide aspartique et un seul est un dérivé de l'acide glutamique. Le pouvoir sucrant (SP) de ces composés (par comparaison avec une solution de saccharose à 5 %) est compris entre 1 et 720 fois celui du saccharose.

TABLEAU 1

| R | * | n | X | SP |
|---|---|---|---|---|
| H | L | 1 | CN | 40 |
| H | L | 1 | $NO_2$ | 1 |
| H | D | 1 | CN | 110 |
| H | D | 1 | $NO_2$ | 50 |
| $CH_3$ | D | 1 | CN | 10 |
| $C_6H_5$ | L | 1 | CN | 720 |
| $C_6H_5$ | L | 1 | $NO_2$ | 420 |
| $CH_3O$ | L | 1 | CN | 70 |
| $CH_3O$ | D | 1 | CN | 140 |
| $C_2H_5O$ | L | 1 | CN | 80 |
| $C_6H_5O$ | L | 1 | CN | 90 |
| $C_6H_5CH_2O$ | L | 1 | CN | 260 |
| $C_6H_5CH_2O$ | D | 1 | CN | 110 |
| $C_6H_5CH_2O$ | D | 1 | $NO_2$ | 70 |
| $C_6H_5CH_2O$ | L | 2 | CN | 2 |

Parmi ceux-ci, le composé possédant le pouvoir édulcorant le plus élevé (720 fois celui du saccharose) dérive de l'acide L-aspartique, et répond à la formule :

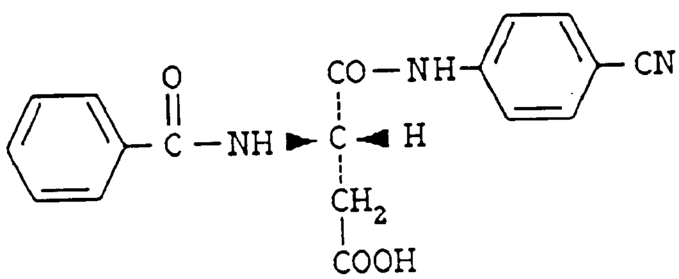

(3)

Le seul composé décrit dérivant de l'acide L-glutamique possède un pouvoir sucrant trés faible, de l'ordre de 2 fois celui du saccharose, ce qui exclut toute possibilité d'application industrielle.

Dans le document EP-A-0.338.946 il a été proposé une nouvelle famille d'agents édulcorants répondant à la formule générale :

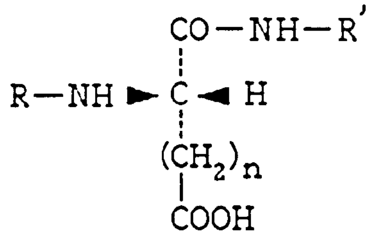

(E)

dans laquelle R est un groupe hydrocarboné de cinq à treize atomes de carbone, saturé ou insaturé, acyclique, cyclique ou mixte ; R' est un groupe 4-cyanophényle, 2-cyanopyrid-5-yle ou 2-cyanopyrimidin-5-yle et n est égal à 1 ou 2. Ce document est illustré par 25 exemples (Tableau 2). L'un des composés préférés de ce document possède un pouvoir sucrant de 1000 fois celui du saccharose et répond à la formule suivante :

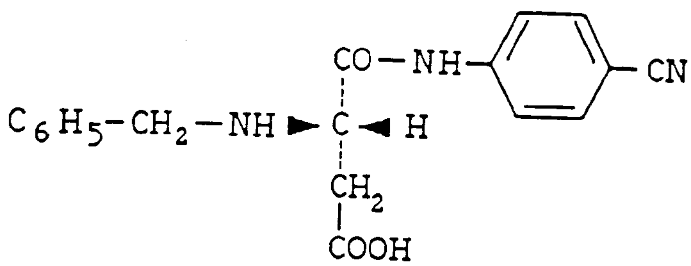

(4)

TABLEAU 2

| R | n | R' | SP |
|---|---|---|---|
| $CH_3(CH_2)_3CH_2$ | 1 | 4-CN-$C_6H_4$ | 300 |
| $CH_3(CH_2)_4CH_2$ | 1 | 4-CN-$C_6H_4$ | 600 |
| $CH_3(CH_2)_5CH_2$ | 1 | 4-CN-$C_6H_4$ | 2 000 |
| $CH_3(CH_2)_6CH_2$ | 1 | 4-CN-$C_6H_4$ | 400 |
| $(CH_3CH_2)_2CHCH_2$ | 1 | 4-CN-$C_6H_4$ | 200 |
| $(CH_3)_2CHCH_2CH_2$ | 1 | 4-CN-$C_6H_4$ | 100 |
| c-$C_6H_{11}CH_2$ | 1 | 4-CN-$C_6H_4$ | 200 |
| c-$C_6H_{11}CH(CH_3)$ | 1 | 4-CN-$C_6H_4$ | 200 |
| $C_6H_5CH_2$ | 1 | 4-CN-$C_6H_4$ | 1 000 |
| $C_6H_5CH_2CH_2$ | 1 | 4-CN-$C_6H_4$ | 300 |
| $CH_3(CH_2)_3CH_2$ | 2 | 4-CN-$C_6H_4$ | 1 500 |
| $CH_3(CH_2)_4CH_2$ | 2 | 4-CN-$C_6H_4$ | 5 000 |
| $CH_3(CH_2)_5CH_2$ | 2 | 4-CN-$C_6H_4$ | 7 000 |
| $CH_3(CH_2)_6CH_2$ | 2 | 4-CN-$C_6H_4$ | 2 000 |
| $(CH_3)_2CHCH_2CH_2$ | 2 | 4-CN-$C_6H_4$ | 800 |
| $CH_3(CH_2)_2CH(CH_3)CH_2$ | 2 | 4-CN-$C_6H_4$ | 5 000 |
| $CH_3(CH_2)_2CH=CHCH_2$ | 2 | 4-CN-$C_6H_4$ | 3 000 |
| $CH_3CH=CHCH=CHCH_2$ | 2 | 4-CN-$C_6H_4$ | 2 000 |
| $C_6H_5CH_2$ | 2 | 4-CN-$C_6H_4$ | 20 |
| $C_6H_5CH=CHCH_2$ | 2 | 4-CN-$C_6H_4$ | 2 000 |
| $C_6H_5CH(CH_3)CH_2CH_2$ | 2 | 4-CN-$C_6H_4$ | 400 |
| c-$C_6H_{11}CH_2CH_2CH_2$ | 2 | 4-CN-$C_6H_4$ | 7 000 |
| $C_6H_5CH_2CH_2$ | 2 | 4-CN-$C_6H_4$ | 300 |
| $C_6H_5CH_2CH_2CH_2$ | 2 | 4-CN-$C_6H_4$ | 800 |
| $CH_3(CH_2)_5CH_2$ | 2 | 2-CN-pyrid-5-yl | 4 000 |

Ainsi, seul un nombre limité de composés décrits dans l'état de la technique présente un pouvoir édulcorant intéressant.

En outre, tous ces composés ont l'inconvénient majeur, pour leur utilisation comme agent édulcorant, d'avoir une faible stabilité en solution aqueuse (c'est-à-dire dans les conditions habituelles d'utilisation des édulcorants de synthèse), ce qui limite considérablement, voire même rend impossible, leur application à l'échelle industrielle.

Ainsi, la présente invention a pour but de fournir une nouvelle famille d'agents édulcorants, dérivés de l'acide L-aspartique ou L-glutamique, qui présentent d'excellentes qualités gustatives associées à un pouvoir édulcorant très élevé, jusqu'à plus de 20000 fois celui du saccharose.

La présente invention a encore pour but de fournir une nouvelle famille d'agents édulcorants présentant

une stabilité élevée, compatible avec les exigences d'utilisation industrielle.

Ainsi, selon un premier aspect, la présente invention a pour objet un nouvel agent édulcorant, caractérisé en ce qu'il répond à la formule générale suivante :

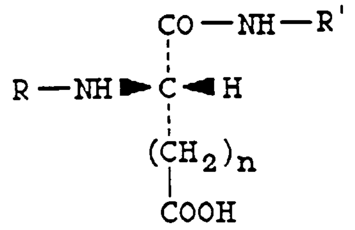

(I)

dans laquelle :

R est un groupe acyle de formule :

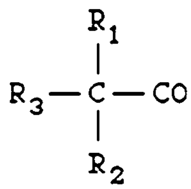

dans laquelle :

$R_1$ est un radical méthyle, éthyle, propyle, isopropyle, phényle, méthoxy, éthoxy, trihalogénométhyle, chloro ou chlorométhyle ;

$R_2$ est un atome d'hydrogène ou un radical méthyle, éthyle ou méthoxy ;

ou bien dans laquelle $R_1$ et $R_2$ pris ensemble avec l'atome de carbone auquel ils sont liés forment un groupe cycloalkyle ayant de 3 à 6 atomes de carbone ;

$R_3$ est un radical alkyle ayant de 3 à 11 atomes de carbone, un radical alcényle ayant de 3 à 7 atomes de carbone, un radical cycloalkyle ayant de 3 à 7 atomes de carbone, un radical cycloalkylalkyle dont la partie cycloalkyle présente de 3 à 6 atomes de carbone et la partie alkyle présente de 1 à 3 atomes de carbone, un radical phényle, un radical phénylalkyle dont la partie alkyle présente de 1 à 3 atomes de carbone, un radical alcoxy ayant de 3 à 10 atomes de carbone, un radical cycloalkyloxy ayant de 3 à 6 atomes de carbone et dont les deux positions adjacentes au carbone 1 fixé à l'oxygène peuvent chacune être substituées par 1 ou 2 groupes méthyle, un radical cycloalkylalcoxy dont la partie cycloalkyle présente de 3 à 6 atomes de carbone et la partie alcoxy présente de 1 à 3 atomes de carbone, un radical phénoxy, un radical phénylalcoxy dont la partie alcoxy présente de 1 à 3 atomes de carbone ;

n est égal à 1 ou 2 ;

R' est un groupe de formule

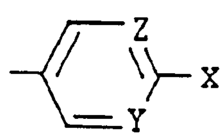

dans laquelle Y et Z, identiques ou différents, représentent N ou CH, et dans laquelle X est choisi dans le groupe constitué par CN, $NO_2$, Cl, $CF_3$, $COOCH_3$, $COCH_3$, $COCF_3$, $CONH_2$, $CON(CH_3)_2$, $SO_2CH_3$, $N_3$ ou H ;

ainsi que ses sels physiologiquement acceptables.

L'invention comprend dans son cadre, tous les diastéréoisomères possibles des composés de formule (I) ainsi que leurs mélanges.

Dans la formule générale (I), un groupe trihalogénométhyle est de préférence un groupe trifluorométhyle ou trichlorométhyle.

Par ailleurs, les groupes alkyle, alcényle ou alcoxy, peuvent être des groupes à chaîne droite ou ramifiée.

Un radical alkyle ayant de 3 à 11 atomes de carbone est par exemple un groupe propyle, isopropyle, butyle,

pentyle, isopentyle, hexyle, isohexyle, néohexyle, di-2,2-tertiobutyléthyle ou di-3,3-tertiobutylpropyle.

Un radical alcényle ayant de 3 à 7 atomes de carbone est par exemple un groupe propényle, butényle, isopentényle, isohexényle, néoheptènyle.

Un radical alcoxy ayant de 3 à 10 atomes de carbone est par exemple un groupe propoxy, isopropoxy, butoxy, pentoxy, hexoxy, isohexoxy, néoheptoxy, éthylpropylméthoxy, dipropylméthoxy, di-tertiobutylméthoxy, di-tertiobutyléthoxy.

Un radical cycloalkyloxy ayant de 3 à 6 atomes de carbone et dont les deux positions adjacentes au carbone 1 fixé à l'oxygène peuvent chacune être substituées par 1 ou 2 groupes méthyle est par exemple un groupe cyclopropyle, cyclobutyle, 2,2,4,4-tétraméthylcyclobutyle, cyclopentyle, 2,2,5,5-tétraméthylcyclopentyle, cyclohexyle, 2,6-diméthylcyclohexyle ou 2,2,6,6-tétraméthylcyclohexyle.

Dans une forme de réalisation préférée :

$R_1$ est un radical méthyle, éthyle, phényle, méthoxy, éthoxy, trifluorométhyle, chloro ou chlorométhyle ;

$R_2$ est un atome d'hydrogène ou un radical méthyle ou éthyle ;

ou bien dans laquelle $R_1$ et $R_2$ pris ensemble avec l'atome de carbone auquel ils sont liés forment un groupe cyclopropyle, cyclobutyle ou cyclopentyle ;

$R_3$ est un radical alkyle normal ayant de 3 à 5 atomes de carbone, un radical alkyle ramifié ayant de 3 à 7 atomes de carbone, un radical alcényle ayant de 3 à 7 atomes de carbone, un radical cycloalkyle ayant de 3 à 6 atomes de carbone, un radical cycloalkylméthyle ou cycloalkyléthyle dont la partie cycloalkyle présente de 3 à 6 atomes de carbone, un radical phényle, un radical phénylméthyle, un radical phényléthyle ou phénylisopropyle, un radical alcoxy ayant de 3 à 6 atomes de carbone, un radical cycloalkyloxy ayant de 3 à 6 atomes de carbone, un radical cycloalkylméthoxy dont la partie cycloalkyle présente de 3 à 6 atomes de carbone, un radical phénoxy, un radical phénylméthoxy ou phényléthoxy ;

n et R' étant définis comme précédemment.

De façon avantageuse, l'agent édulcorant selon l'invention, est caractérisé en ce que :

$R_1$ est choisi dans le groupe constitué par $CH_3$, $C_2H_5$, $C_6H_5$ ou $CH_3O$ ;

$R_2$ est choisi dans le groupe constitué par H ou $CH_3$ ;

ou bien dans laquelle $R_1$ et $R_2$ pris ensemble avec l'atome de carbone auquel ils sont liés forment un groupe cyclopropyle ;

$R_3$ est choisi dans le groupe constitué par $CH_3(CH_2)_2$, $CH_3(CH_2)_3$, $CH_3(CH_2)_4$, $(CH_3)_2CH(CH_2)_2$, $c\text{-}C_6H_{11}$, $c\text{-}C_6H_{11}CH_2$, $C_6H_5$, $C_6H_5CH_2$, $c\text{-}C_6H_{11}O$ ou $C_6H_5O$.

De façon encore plus avantageuse, l'agent édulcorant selon l'invention, est caractérisé en ce que :

$R_1$ est choisi dans le groupe constitué par $CH_3$, $C_2H_5$ ;

$R_2$ est H ou $CH_3$ ;

$R_3$ est choisi dans le groupe constitué par $CH_3(CH_2)_3$, $CH_3(CH_2)_4$, $c\text{-}C_6H_{11}O$ ou $C_6H_5O$.

Tous les agents édulcorants ainsi définis présentent un pouvoir édulcorant élevé, généralement au moins égal à celui des composés de l'état de la technique présentant les pouvoirs édulcorants les plus intenses.

L'invention est fondée sur la découverte tout à fait inattendue montrant que la présence d'un groupe acyle 2-substitué R, dans des composés dérivant de l'acide L-aspartique ou L-glutamique, conduisait à un accroissement notable du pouvoir édulcorant de tels composés.

Par ailleurs, il a été observé que l'intensité édulcorante des composés de l'invention variait suivant la configuration du groupe acyle R (lorsque $R_1$, $R_2$ et $R_3$ représentent des radicaux différents).

Par exemple, lorsque $R_1$ représente un groupe méthyle et $R_2$ un atome d'hydrogène, on constate, dans le cas où $R_3$ représente un groupe butyle, que le pouvoir édulcorant des composés, dont le groupe acyle présente une configuration (S), est plus élevé que celui des composés correspondants dont le groupe acyle présente une configuration (R). Par contre, lorsque $R_3$ représente un groupe phénoxy, le pouvoir édulcorant des composés dont le groupe acyle présente une configuration (R) est nettement plus élevé que celui des composés correspondants dont le groupe acyle présente une configuration (S).

C'est pourquoi les composés de formule (I), dont le radical acyle R présente la configuration suivante :

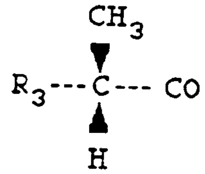

dans laquelle $R_3$ est défini comme précédemment, forment une classe très intéressante de composés selon

l'invention.

Il a en outre été observé que, parmi ces composés, ceux dérivant de l'acide L-glutamique présentaient une stabilité remarquable compatible avec les exigences industrielles les plus sévères, notamment celles de la fabrication des boissons gazeuses.

Ainsi, Les dérivés de l'invention de formule (I), dans laquelle n est égal à 2, s'avérent particulièrement intéressants et forment une sous-famille préférée de composés de l'invention.

Il a également été observé que les composés de formule (I) dans laquelle le radical R' représente un groupe de formule :

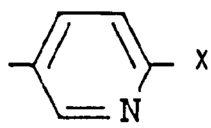

présentaient, en raison de la présence de l'atome d'azote polaire dans Le cycle, une solubilité et une intensité édulcorante particulièrement élevées. Parmi ceux-ci, les composés de formule précitée dans laquelle X représente CN sont encore préférés.

C'est pourquoi une autre classe préférée de composés de l'invention est représentée par la formule générale suivante :

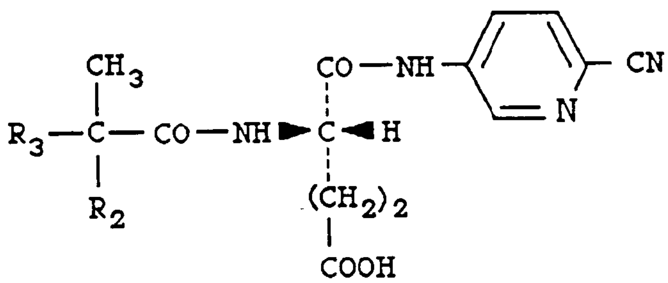

dans laquelle $R_2$ représente un atome d'hydrogène ou un groupe méthyle et $R_3$ est tel que défini précédemment.

Les agents édulcorants de cette classe présentent des pouvoirs édulcorants extrêmement élevés, en particulier lorsque $R_3$ représente un groupe butyle ou phénoxy.

Ainsi, les composés actuellement préférés de l'invention sont les composés suivants :

N-[(S)-2-méthylhexanoyl]-alpha-L-glutamyl-5-amino-2-pyridinecarbonitrile de formule :

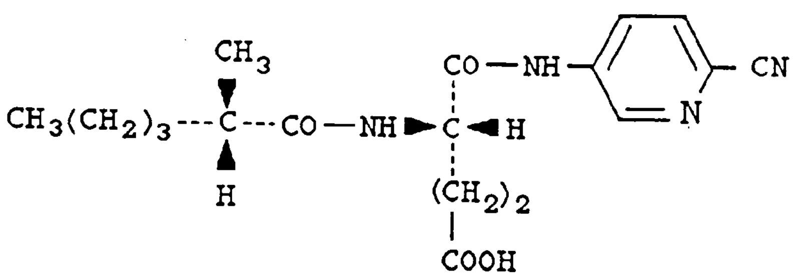

(5)

N-(2,2-diméthylhexanoyl)-alpha-L-glutamyl-5-amino-2-pyridinecarbonitrile de formule :

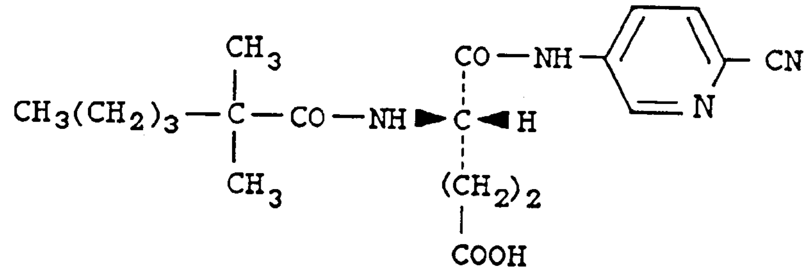

N-[(R)-2-phénoxypropanoyl]-alpha-L-glutamyl-5-amino-2-pyridinecarbonitrile de formule :

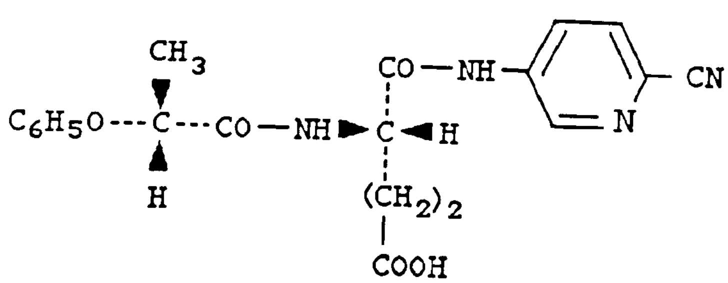

(6)

D'une façon générale, les composés de l'invention se distinguent de ceux décrits dans l'art antérieur par un pouvoir édulcorant nettement plus élevé qui peut être jusqu'à plus de 100 (cent) fois supérieur. Par exemple, certains composés de l'invention présentent des pouvoirs édulcorants pouvant atteindre plus de 20000 fois celui du saccharose, beaucoup plus intenses que les composés de l'art antérieur dont les pouvoirs édulcorants sont en moyenne très nettement plus faibles.

Comme mentionné précédemment, le composé (1) décrit dans les documents US-A-3.725.453 et 3.775.460 présente un pouvoir édulcorant de 3000 fois celui du saccharose, le composé (2) cité dans le document JP-A-87-132847 présente un pouvoir sucrant de seulement 40, et les composés (3) et (4) décrits dans les documents JP-A-87-252754 et EP-A-0.338.946 présentent un pouvoir sucrant respectivement de 720 et de 1000 fois celui du saccharose.

Ainsi, les composés de l'art antérieur les plus intéressants du point de vue de leur pouvoir sucrant sont 8 à 30 fois moins actifs que les composés préférés de l'invention.

La stabilité des composés de l'invention, en particulier de ceux contenant le résidu L-glutamyle, est très élevée et peut être dans certains cas environ trois cents fois supérieure à celle des composés de l'art antérieur. C'est ainsi, par exemple, qu'on a pu constater par une étude de vieillissement accéléré (chauffage prolongé à 70 °C d'une solution aqueuse à pH 3) que deux composés caractéristiques de l'invention, les composés (5) et (6), présentent une demi-vie d'environ 60 (soixante) jours dans ces conditions de vieillissement accéléré.

A titre de comparaison, la demi-vie de quelques composés décrits dans l'art antérieur a été évaluée dans ces mêmes conditions standards. C'est ainsi que le composé (1) décrit dans les documents US-A-3.725.453 et 3.775.460 présente une demi-vie d'environ 15 heures, que le composé (2) cité dans le document JP-A-87-132847 a une demi-vie d'environ 20 heures, que le composé (3) décrit dans le document JP-A-87-252754 a une demi-vie d'environ 8 heures et que le composé (4) décrit dans le document EP-A-0.338.946 a une demi-vie d'environ 2 jours. Dans tous les cas, la stabilité des composés caractéristiques de la présente invention est beaucoup plus élevée avec une demi-vie 30 à 300 fois plus élevée.

Enfin, comparativement à l'édulcorant de synthèse actuellement le plus utilisé, l'aspartame (7) dont le pouvoir édulcorant est 180 fois celui du saccharose, les composés préférés de l'invention sont plus de 120 fois plus édulcorants mais aussi jusqu'à 60 fois plus stables, la demi-vie de l'aspartame n'étant que de 1 jour dans ces conditions standards.

On a représenté à la figure 1, les courbes de stabilité des composés (1) (2) (3) (4) de l'etat de la technique, de deux composés caractéristiques de l'invention (5) et (6) ainsi que de l'aspartame (7).

En conclusion, la présence dans les agents édulcorants de l'invention d'un radical acyle 2-substitué a pour effet d'augmenter de façon spectaculaire le pouvoir édulcorant des composés dérivant de l'acide L-aspartique ou L-glutamique et donc de réduire de façon notable leur coût de revient. A cela s'ajoute une stabilité renforcée, en particulier pour les composés de l'invention contenant l'acide L-glutamique. De prime abord, on ne pouvait pas spéculer que l'introduction d'un groupe acyle, substitué en position 2, ou pour les composés préférés de

l'invention, que le choix de l'acide L-glutamique conduise à un tel résultat puisque, comme on le sait, toute modification, même légère, dans la structure moléculaire d'un agent édulcorant peut entraîner une altération à la fois de l'activité édulcorante et des propriétés connexes comme par exemple la stabilité.

Les agents édulcorants de la présente invention peuvent être ajoutés à tout produit comestible dans lequel on désire apporter un goût sucré, à condition de les ajouter en proportions suffisantes pour atteindre le niveau de sucrosité désiré. La concentration optimale d'utilisation de l'agent édulcorant dépendra de facteurs divers tels que, par exemple, le pouvoir sucrant de l'agent édulcorant, les conditions de stockage et d'utilisation des produits, les constituants particuliers des produits, le profil gustatif des produits comestibles et le niveau de sucrosité désiré. Toute personne qualifiée peut facilement déterminer la proportion optimale d'agent édulcorant qui doit être employée pour l'obtention d'un produit comestible en réalisant des analyses sensorielles de routine. Les agents édulcorants de la présente invention sont, en général, ajoutés aux produits comestibles dans des proportions allant, suivant le pouvoir édulcorant du composé, de 10 mg à 500 mg d'agent édulcorant par kilogramme ou par litre de produit comestible. Les produits concentrés contiendront évidemment des quantités plus élevés d'agent édulcorant, et seront ensuite dilués suivant les intentions finales d'utilisation.

Les agents édulcorants de la présente invention peuvent être ajoutés sous forme pure aux produits à édulcorer, mais en raison de leur pouvoir sucrant élevé, ils sont généralement mélangés à un support ("carrier") ou à un agent de charge ("bulking agent") approprié.

Avantageusement, les supports ou agents de charge appropriés sont choisis dans le groupe constitué par le polydextrose, l'amidon, les maltodextrines, la cellulose, la méthylcellulose, la carboxyméthylcellulose et autres dérivés de la cellulose, l'alginate de sodium, les pectines, les gommes, le lactose, le maltose, le glucose, la leucine, le glycérol, le mannitol, le sorbitol, le bicarbonate de sodium, les acides phosphorique, citrique, tartrique, fumarique, benzoique, sorbique, propionique, et leurs sels de sodium, potassium et calcium, et leurs équivalents.

Les présents agents édulcorants peuvent, dans un produit comestible, être employés seuls, comme unique agent édulcorant, ou sous forme de mélanges de deux ou plusieurs agents édulcorants de la présente invention. Les présents agents édulcorants peuvent, en outre, être utilisés en combinaison avec d'autres agents édulcorants tels que les sucres (saccharose), le sirop de maïs, le fructose, les dérivés dipeptidiques sucrés (aspartame, alitame), la néohespéridine dihydrochalcone, l'isomaltulose hydrogéné, le stévioside, les sucres L, la glycyrrhizine, le xylitol, le sorbitol, le mannitol, l'acésulfame-K, la saccharine et ses sels de sodium, potassium, ammonium et calcium, l'acide cyclamique et ses sels de sodium, potassium et calcium, le sucralose, la monelline, la thaumatine, et leurs équivalents.

D'une façon générale, les composés de la présente invention peuvent être préparés par tout procédé permettant la formation de deux liaisons amidiques au niveau des groupes alpha-amino et alpha-carboxyle de l'acide L-aspartique (n = 1) ou L-glutamique (n = 2).

Selon un second aspect, la présente invention a pour objet un procédé de préparation d'un agent édulcorant de formule (I) tel que défini précédemment, caractérisé en ce qu'il comprend la réaction, dans un ordre quelconque, entre :

. d'une part, l'acide L-aspartique ou l'acide L-glutamique, dont respectivement le groupe bêta ou gamma-carboxyle est éventuellement protégé, et
. d'autre part :
  - un acide de formule

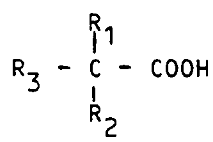

ou son chlorure d'acide ;
  - et une amine de formule $H_2N$-R' ;
  - $R_1$, $R_2$, $R_3$ et R' étant tels que définis précédemment ;

de façon à créer ainsi deux liaisons amidiques au niveau des groupes alpha-amino et alpha-carboxyle de l'acide L-aspartique ou de l'acide L-glutamique ;

et la transformation éventuelle du produit ainsi obtenu en un sel physiologiquement acceptable, tel qu'un sel de sodium, potassium, ammonium, calcium ou magnésium.

Ce procédé se caractérise donc en ce qu'il consiste en la formation d'une liaison amidique entre un acide de formule :

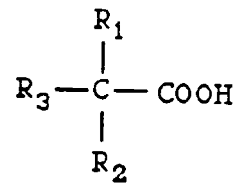

ou son chlorure d'acide ;
et une amine de formule :

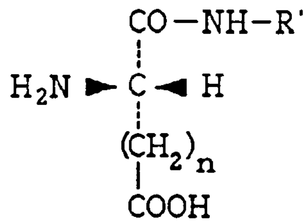

ou en la formation d'une liaison amidique entre un acide de formule

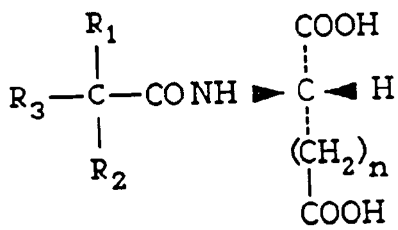

et une amine de formule :

$$H_2N\text{-}R'$$

$R_1$, $R_2$, $R_3$, n et R' étant dans ces formules définis comme précédemment.

De nombreuses méthodes permettent de réaliser ces liaisons amidiques. Elles sont décrites dans la littérature. L'ordre dans lequel chacune de ces liaisons est créée relève du choix de l'homme de l'art et des techniques particulières choisies. Ainsi, la condensation amidique entre un acide carboxylique et une amine peut être effectuée soit en présence d'un agent déshydratant convenable, comme les carbodiimides avec notamment la N,N'-dicyclohexylcarbodiimide, soit en activant l'un des deux partenaires amino ou carboxylique. Dans ce cas, l'activation du groupe carboxyle peut être réalisée par diverses méthodes dont on peut signaler en particulier celles faisant intervenir la synthèse d'un intermédiaire anhydride mixte, chlorure d'acide, azide ou ester activé (comme par exemple un ester du para-nitrophénol ou du N-hydroxysuccinimide).

Dans le cas particulier des acides L-aspartique ou L-glutamique, une protection préalable du groupe bêta ou gamma-carboxyle de la chaîne latérale peut parfois s'avérer nécessaire avant d'effectuer la condensation amidique. Pour cela, de nombreux groupes protecteurs du groupe carboxyle sont décrits dans la littérature. La protection sous forme d'un ester est la plus fréquente et plus particulièrement sous la forme d'un ester tert-butylique ou d'un ester benzylique.

Dans certains cas, la protection de ce groupe carboxyle peut néanmoins être évitée en formant un anhydride interne entre d'une part, le groupe alpha carboxyle, et d'autre part les groupes bêta ou gamma-carboxyle de l'acide L-aspartique ou L-glutamique suivant la réaction :

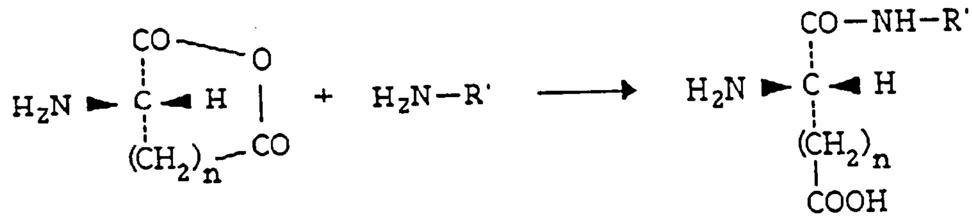

Le groupe alpha-amino pouvant être soit salifié (sous forme par exemple de chlorhydrate, de sulfate ou de benzènesulfonate) soit protégé par un groupe protecteur. Pour cela, de nombreux groupes protecteurs du groupe alpha-amino sont décrits dans la littérature comme par exemple, trifluoroacétyle, benzyloxycarbonyle ou tert-butoxycarbonyle.

Une autre technique permettant d'éviter la protection de ce groupe bêta ou gamma-carboxyle consiste à efectuer la condensation amidique en solution aqueuse, l'activation est alors effectuée en transformant l'acide carboxylique $(R_1R_2R_3)CCOOH$ en chlorure d'acide carboxylique. La réaction est alors très avantageusement réalisée en milieu basique dans un mélange eau-tétrahydrofurane. L'agent basique est de préférence $NaHCO_3$, $Na_2CO_3$, NaOH ou KOH. On peut citer à titre d'exemples la réaction suivante permettant d'obtenir l'un des précurseurs des composés de l'invention :

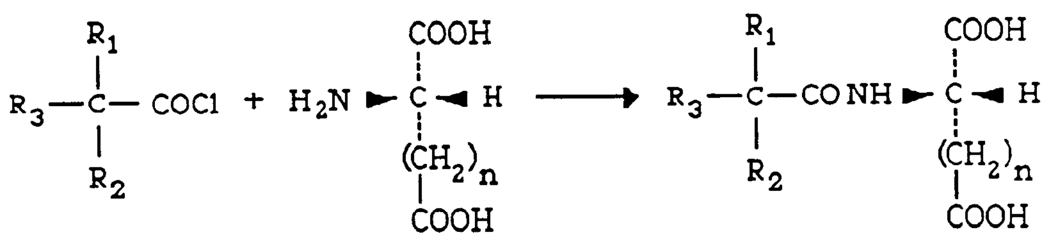

ou encore la réaction suivante permettant d'obtenir directement les composés de l'invention :

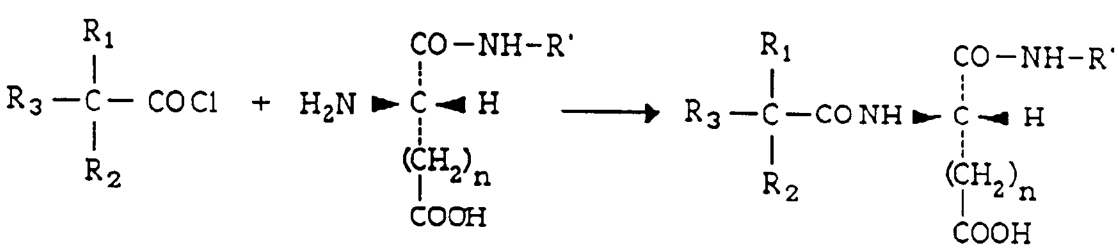

Les agents édulcorants de l'invention peuvent aussi être salifiés par des bases inorganiques ou organiques physiologiquement acceptables, ce qui a pour effet d'améliorer notablement leur vitesse de dissolution en solution aqueuse. Avantageusement, ces composés sont salifiés sous forme de sels de sodium, potassium, ammonium, calcium ou magnésium. La préparation de ces sels peut être effectuée après concentration d'une solution aqueuse contenant le composé de l'invention et l'agent basique choisi, comme par exemple NaOH ou $Na_2CO_3$ pour les sels de sodium.

La purification des composés de l'invention, sous leur forme acide ou salifiée, est réalisée selon les techniques standards telles que la recristallisation ou la chromatographie. Leur structure et leur pureté ont été contrôlées par les techniques classiques (chromatographie sur couche mince, chromatographie liquide haute performance, spectrométrie infra-rouge, résonance magnétique nucléaire, analyse élémentaire).

Le pouvoir édulcorant des composés décrits dans les exemples a été évalué par un groupe de huit personnes expérimentées. Pour cela, les composés, en solution aqueuse à des concentrations variables, sont comparés, sur le plan gustatif, à une solution témoin de saccharose à 2 %, à 5 % ou à 10 %. Le pouvoir édulcorant du composé testé par rapport au saccharose correspond alors au rapport pondéral qui existe entre le composé et le saccharose à égale intensité édulcorante, c'est-à-dire quand les saveurs sucrées de la solution du composé testé et de la solution témoin de saccharose sont considérées, par une majorité de personnes, avoir la même intensité édulcorante.

La stabilité des composés de l'art antérieur et de ceux de l'invention est mesurée en dosant, par chromatographie liquide haute performance (HPLC), la quantité de produit restant après un vieillissmeent accéléré en milieu acide (tampon phosphate à pH 3) et à haute température (70 °C). Dans ces conditions expérimentales, la mesure de la demi-vie (temps correspondant à 50 % de dégradation) permet d'évaluer la stabilité potentielle des composés ainsi testés. Un composé peu stable présentera une demi-vie très courte, quelques heures seulement, alors qu'un composé très stable présentera une demi-vie de plusieurs dizaines de jours, comme cela est le cas par exemple pour les composés (5) et (6) de l'invention qui présentent une demi-vie d'environ 60 jours (Figure 1).

La manière dont l'invention peut être réalisée et les avantages qui en découlent, ressortiront mieux des exemples de réalisation qui suivent.

## EXEMPLES

Parmi les différentes techniques de préparation possibles pour obtenir les composés de l'invention, l'une de celles préférées consiste à condenser un dérivé amino de formule :

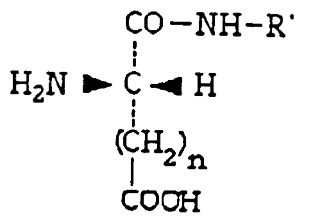

(II)

avec un acide carboxylique, préalablement activé sous forme de chlorure d'acide carboxylique. L'acide carboxylique est soit commercial soit préparé selon les procédés décrits dans la littérature (par exemple J. Amer. Chem. Soc. 1970, 12, 1397).

Le dérivé amino peut être avantageusement préparé suivant la procédure décrite dans J. Med. Chem. 1973, 16, 163 à partir d'acide L-aspartique ou L-glutamique et une amine $H_2N$-R', cette dernière amine étant généralement d'origine commerciale ou préparée selon les procédés décrits dans la littérature (par exemple : Khim. Geterotsikl. Soedin., 1974, 12, 1645 ; Khim. Geterotsikl. Soedin., 1982, 11, 1545 ; Collect. Czech. Chem. Commun., 1975, 40, 1384).

1. Synthèse du N-[(S)-2-méthylhexanoyl]-alpha-L-glutamyl-5-amino-2-pyridinecarbonitrile :

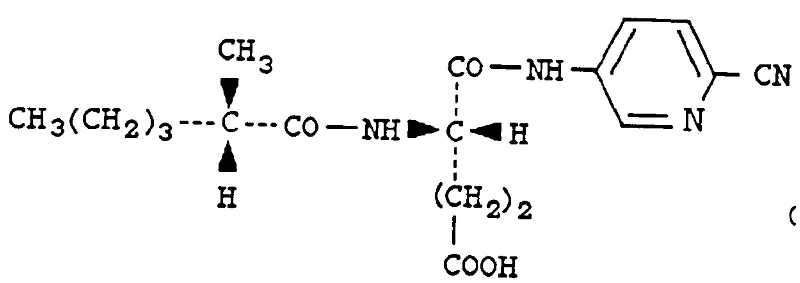

(5)

Pour préparer ce composé, 1,2 g (0,008 mole) de chlorure de (S)-2-méthylhexanoyle (préparé par réaction du pentachlorure de phosphore et de l'acide (S)-2-méthylhexanoïque lui-même obtenu suivant la méthode décrite dans J. Biol. Chem. 1926, 70, 211 ibid, 1932, 98, 1 et Chem. Pharm. Bull. 1979, 27, 747), en solution dans 30 $cm^3$ de tétrahydrofurane anhydre, est ajouté goutte à goutte à une solution de 1 g (0,004 mole) d'alpha-L-glutamyl-5-amino-2-pyridinecarbonitrile (préparé selon J. Med. Chem. 1973, 16, 163) et de 3,4 g (0,04 mole) de $NaHCO_3$ dans 30 $cm^3$ d'eau. Après 15 minutes d'agitation à 20 °C, le tétrahydrofurane est éliminé sous vide et la solution aqueuse restante est acidifiée à pH 2-3 par une solution d'HCl 6N, ce qui permet d'obtenir, après filtration et trituration dans l'hexane, un précipité de 1 g de N-[(S)-2-méthylhexanoyl]-alpha-L-glutamyl-5-amino-2-pyridine carbonitrile (rendement 69 %, point de fusion 146 °C, l'état amorphe).

Le pouvoir édulcorant de ce composé correspond approximativement sur une base pondérale à 20 000 (vingt mille) fois celui du saccharose par comparaison avec une solution de saccharose à 2 %, à 15 000 (quinze

mille) par comparaison avec une solution de saccharose à 5 % et à 10 000 (dix mille) par comparaison avec une solution de saccharose à 10 %, ce qui revient à dire que, dans ces conditions, une solution aqueuse de 10 mg/l du composé présente une saveur sucrée intense équivalente à celle d'une solution de saccharose à 10 %, ce qui correspond aux intensités édulcorantes généralement utilisées dans les préparations alimentaires.

La stabilité de ce composé est excellente. Une évaluation effectuée par un vieillissement accéléré dans les conditions standards précédemment décrites (pH 3, 70 °C) indique que la demi-vie du composé dans ces conditions est d'environ 60 jours. Du fait de sa haute sucrosité et de sa grande stabilité, l'emploi le plus large de ce composé dans les préparations alimentaires peut donc être envisagé.

2. Synthèse du N-(2,2-diméthylhexanoyl)-alpha-L-glutamyl-5-amino-2-pyridinecarbonitrile :

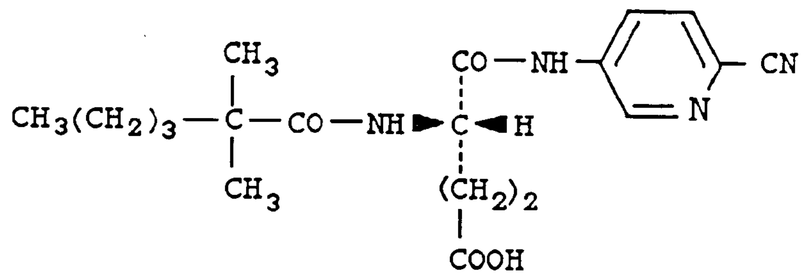

Ce composé est obtenu à partir du chlorure de 2,2-diméthylhexanoyle (préparé par réaction du pentachlorure de phosphore et de l'acide 2,2-diméthylhexanoique obtenu selon la procédure décrite dans J. Amer. Chem. Soc. 1970, 12, 1397) et de l'alpha-L-glutamyl-5-amino-2-pyridine carbonitrile suivant la procédure décrite dans l'exemple précédent (rendement 60 %, point de fusion 138 °C, à l'état amorphe).

Le pouvoir édulcorant de ce composé correspond approximativement sur une base pondérale à 22 000 (vingt-deux mille) fois celui du saccharose par comparaison avec une solution de saccharose à 2 %, à 15 000 (quinze mille) par comparaison avec une solution de saccharose à 5 % et à 14 000 (quatorze mille) par comparaison avec une solution de saccharose à 10 %.

La stabilité de ce composé est aussi excellente avec une demi-vie évaluée dans les conditions standards (pH 3, 70 °C) à environ 70 jours. Comme dans l'exemple précédent, l'utilisation de ce composé peut donc être envisagée dans les préparations alimentaires.

3. Synthèse du N-[(R)-2-phenoxypropanoyl]-alpha-L-glutamyl-5-amino-2-pyridinecarbonitrile :

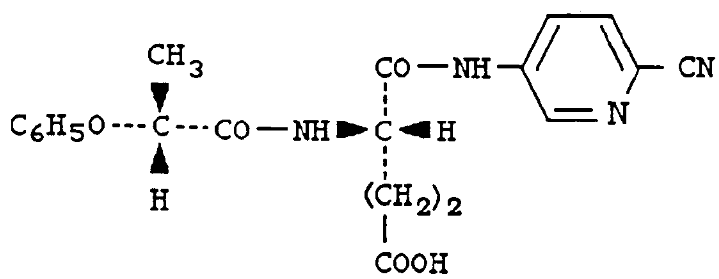

(6)

Ce composé est obtenu à partir du chlorure de (R)-2-phénoxypropanoyl (obtenu selon Nouv. J. Chim., 1982, 10, 685 ; Chem. Ber. 1984, 117, 3457 ; J. Chem. Soc. C. 1968, p 1317 ; Ark. Kemi 1952, 4, 325) et de l'alpha-L-glutamyl-5-amino-2-pyridine carbonitrile suivant la procédure décrite dans l'exemple précédent (rendement 40 %, point de fusion 110 °C, à l'état amorphe).

Le pouvoir édulcorant de ce composé correspond approximativement sur une base pondérale à 25 000 (vingt-cinq mille) fois celui du saccharose par comparaison avec une solution de saccharose à 2 %. Sa stabilité évaluée dans les mêmes conditions expérimentales standards (pH 3, 70 °C) est également très grande, d'environ 60 jours, ce qui permet d'envisager aussi l'utilisation très large de ce composé dans les préparations alimentaires.

4. Synthèse du N-[-(S)-2-méthylhexanoyl]-alpha-L-glutamyl-4-aminophénylcarbonitrile

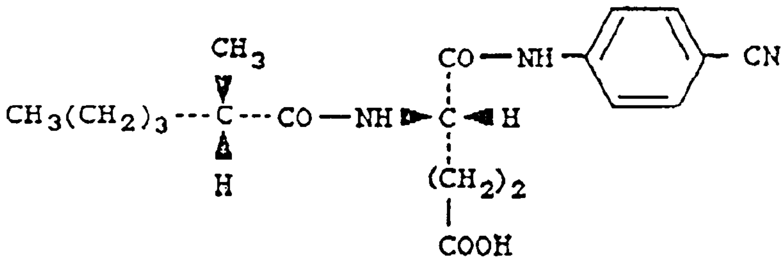

57,6 $cm^3$ (0,408 mole) d'anhydride trifluoroacétique sont ajoutés goutte à goutte à 30 g (0,408 mole) d'acide L-glutamique. Le mélange est chauffé durant 2 h à 70 °C. Après élimination de l'acide trifluoroacétique formé par évaporation sous vide, le résidu obtenu est trituré dans un mélange éther-hexane. L'anhydride de l'acide N-trifluoroacétyl-L-glutamique est obtenu avec un rendement pratiquement quantitatif.

Un mélange de 30 g (0,133 mole) de l'anhydride ainsi obtenu et de 15,6 g (0,133 mole) de 4-aminobenzonitrile, dans 100 $cm^3$ de tétrahydrofuranne, est agité durant 12 h à 40 °C . Après évaporation du solvant sous vide, le résidu est dissous dans 200 $cm^3$ d'une solution à 5 % de $Na_2CO_3$ et la solution est lavée par le chlorure de méthylène (3 x 100 $cm^3$) puis est acidifiée à pH 2-3 par une solution de HCl 6 N. Le précipité formé est filtré, lavé par quelques $cm^3$ d'eau et séché pour conduire à l'obtention de 27 g (rendement 60 %) d'un mélange d'isomères alpha- et gamma-L-glutamyl-4-aminophénylcarbonitrile. L'isomère alpha seul est obtenu après recristallisation dans un mélange éthanol-hexane (150-90). On obtient finalement 15 g de N-trifluoroacétyl-L-glutamyl-alpha-4-aminophénylcarbonitrile (rendement final 33 %, point de fusion 197 °C).

La solution de 2,5 g (7,28 mmoles) de ce composé dans 25 $cm^3$ ammoniaque à 12,5 % est agitée durant 4 h à 20 °C. Après concentration à sec par évaporation sous vide, le résidu solide obtenu est lavé par l'acétate d'éthyle (2 x 50 $cm^3$) puis est séché, ce qui conduit à l'obtention de 1,5 g d'alpha-L-glutamyl-4-aminophénylcarbonitrile (rendement 90 %, point de fusion 160 °C).

Pour préparer le N-[(S)-2-méthylhexanoyl]-alpha-L-glutamyl-4-aminophénylcarbonitrile, 1,2 g (0,008 mole) de chlorure de (S)-2-méthylhexanoyle (préparé par réaction du pentachlorure de phosphore et de l'acide correspondant), en solution dans 30 $cm^3$ de tétrahydrofuranne anhydre, est ajouté goutte à goutte à une solution de 1 g (0,004 mole) d'alpha-L-glutamyl-4-aminophénylcarbonitrile préparé suivant le protocole ci-dessus et de 3,3 g de $NaHCO_3$ dans 30 $cm^3$ d'eau. Après 15 min d'agitation à 20 °C, le tétrahydrofuranne est éliminé sous vide et la solution aqueuse restante est acidifiée à pH 2-3 par une solution de HCl 6N, ce qui permet d'obtenir, après filtration et trituration dans l'hexane, un précipité de 1 g de N- (S)-2-méthylhexanoyl -alpha-L-glutamyl-4-aminophénylcarbonitrile (rendement 69 %, point de fusion 143 °C, à l'état amorphe).

Le pouvoir édulcorant de ce composé est approximativement, sur une base pondérale, de 9 000 (neuf mille) fois celui du saccharose par comparaison avec une solution de saccharose à 2 %. La stabilité de ce composé est excellente. Sa demi-vie, évaluée dans les conditions précédemment décrites (pH 3, 70 °C), est supérieure à 60 jours.

Le tableau 3 récapitulatif ci-dessous donne, à titre d'exemples, la liste de quelques composés obtenus suivant des protocoles expérimentaux similaires à ceux décrits ci-dessus et que l'homme de métier retrouvera facilement, ainsi que leur pouvoir édulcorant relatif, évalué sur une base pondérale, par rapport au saccharose en solution aqueuse à 2 %. Lorsque les groupes $R_1$, $R_2$ et $R_3$ sont différents, la configuration du carbone asymétrique auquel ils sont liés (carbone marqué d'un astérisque), est désignée suivant les règles classiques de stéréochimie en utilisant le système R/S : R, S ou quand les deux configurations coexistent dans un même composé, RS.

## ETUDE DE LA STABILITE

Dans la figure 1 annexée est donnée une étude comparative des courbes de dégradation de quelques composés de l'art antérieur, de l'aspartame (l'édulcorant de synthèse le plus utilisé) et de auelques composés de l'invention ; cette étude consistant en un vieillissement accéléré par chauffage à 70 °C de leur solution en milieu acide (pH 3).

Les courbes (1) à (4) montrent la dégradation rapide dans ces conditions des composés de formule (1) à (4) décrits dans l'art antérieur précédemment cité. La courbe (5) et (6) est en revanche caractéristique de la grande stabilité des composés de l'invention, en particulier de ceux contenant l'acide L-glutamique. Enfin, la courbe (7) montre la stabilité relativement faible de l'aspartame, dont la demi-vie, dans ces mêmes conditions

d'étude, n'est que d'environ 1 jour.

TABLEAU 3

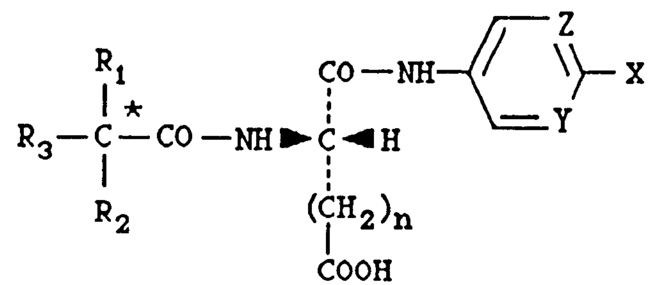

| $R_1$ | $R_2$ | $R_3$ | * | n | Y | Z | X | SP |
|---|---|---|---|---|---|---|---|---|
| $CH_3$ | H | $CH_3(CH_2)_2$ | R | 2 | CH | CH | CN | 500 |
| $CH_3$ | H | $CH_3(CH_2)_2$ | S | 2 | CH | CH | CN | 2800 |
| $CH_3$ | H | $CH_3(CH_2)_3$ | R | 2 | CH | CH | CN | 3000 |
| $CH_3$ | H | $CH_3(CH_2)_3$ | S | 2 | CH | CH | CN | 9000 |
| $CH_3$ | H | $(CH_3)_2CH(CH_2)_2$ | RS | 2 | CH | CH | CN | 6000 |
| $CH_3$ | H | $CH_3(CH_2)_4$ | RS | 2 | CH | CH | CN | 1000 |
| $CH_3$ | H | $C_6H_5$ | R | 2 | CH | CH | CN | 1300 |
| $CH_3$ | H | $C_6H_5$ | S | 2 | CH | CH | CN | 1500 |
| $CH_3$ | H | $CH_3(CH_2)_3$ | R | 2 | N | CH | CN | 2000 |
| $CH_3$ | H | $CH_3(CH_2)_3$ | S | 2 | N | CH | CN | 20000 |
| $CH_3$ | H | $C_6H_5$ | R | 2 | N | CH | CN | 2500 |

TABLEAU 3 (suite)

| $R_1$ | $R_2$ | $R_3$ | * | n | Y | Z | X | SP |
|---|---|---|---|---|---|---|---|---|
| $CH_3$ | H | $C_6H_5$ | S | 2 | N | CH | CN | 4000 |
| $CH_3$ | H | $c-C_6H_{11}$ | RS | 2 | CH | CH | CN | 1000 |
| $C_2H_5$ | H | $CH_3(CH_2)_3$ | RS | 2 | CH | CH | CN | 5000 |
| $C_2H_5$ | H | $C_6H_5$ | RS | 2 | CH | CH | CN | 2700 |
| $C_6H_5$ | H | $C_6H_5$ | | 2 | CH | CH | CN | 250 |
| $CH_3O$ | H | $C_6H_5$ | RS | 2 | CH | CH | CN | 2300 |
| $CH_3O$ | H | $C_6H_5$ | R | 2 | N | CH | CN | 11000 |
| $CH_3O$ | H | $C_6H_5$ | S | 2 | N | CH | CN | 3000 |
| $CH_3O$ | H | $CH_3(CH_2)_3$ | RS | 2 | N | CH | CN | 2000 |
| $CH_3$ | H | $C_6H_5O$ | RS | 2 | CH | CH | CN | 4000 |
| $CH_3$ | H | $CH_3(CH_2)_2O$ | R | 2 | CH | CH | CN | 400 |
| $CH_3$ | H | $CH_3(CH_2)_2O$ | S | 2 | CH | CH | CN | 200 |
| $CH_3$ | H | (2,6-diMe)-c-$C_6H_9O$ | RS | 2 | CH | CH | CN | 1000 |
| $CH_3$ | H | $C_6H_5O$ | RS | 2 | N | CH | CN | 13000 |
| $CH_3$ | H | $C_6H_5O$ | R | 2 | N | CH | CN | 25000 |
| Cl | H | $C_6H_5$ | RS | 2 | CH | CH | CN | 2200 |

TABLEAU 3 (suite)

| $R_1$ | $R_2$ | $R_3$ | * | n | Y | Z | X | SP |
|---|---|---|---|---|---|---|---|---|
| $CF_3$ | $CH_3O$ | $C_6H_5$ | S | 2 | CH | CH | CN | 600 |
| $CH_3$ | $CH_3$ | $CH_2{=}CHCH_2$ | | 2 | CH | CH | CN | 500 |
| $CH_3$ | $CH_3$ | $CH_3(CH_2)_3$ | | 2 | CH | CH | CN | 11000 |
| $CH_3$ | $CH_3$ | $(CH_3)_2CH(CH_2)_2$ | | 2 | CH | CH | CN | 10000 |
| $CH_3$ | $CH_3$ | $(CH_3)_3CH(CH_2)_2$ | | 2 | CH | CH | CN | 4000 |
| $CH_3$ | $CH_3$ | $CH_3(CH_2)_3$ | | 2 | N | CH | CN | 22000 |
| $CH_3$ | $CH_3$ | $CH_3(CH_2)_4$ | | 2 | N | CH | CN | 3000 |
| $CH_2-CH_2$ | | $C_6H_5$ | | 2 | CH | CH | CN | 2500 |
| $CH_2(CH_2)_2CH_2$ | | $C_6H_5$ | | 2 | CH | CH | CN | 2000 |
| $CH_2(CH_2)_2CH_2$ | | $C_6H_5$ | | 2 | N | CH | CN | 3000 |
| $CH_2-CH_2$ | | $C_6H_5$ | | 1 | CH | CH | CN | 1000 |
| $CH_3$ | H | $CH_3(CH_2)_3$ | RS | 1 | CH | CH | CN | 1500 |
| $CH_3$ | H | $C_6H_5O$ | R | 1 | CH | CH | CN | 18000 |
| $CH_3$ | H | $CH_3(CH_2)_3$ | S | 2 | CH | CH | $COCH_3$ | 300 |
| $CH_3$ | H | $CH_3(CH_2)_3$ | S | 2 | CH | CH | $CONH_2$ | 700 |
| $CH_3$ | $CH_3$ | $CH_3(CH_2)_3$ | | 2 | N | CH | Cl | 600 |
| $CH_3$ | H | $CH_3(CH_2)_3$ | S | 2 | N | N | CN | 10000 |

## Revendications

**Revendications pour les Etats contractants suivants : AT, BE, CH, DE, DK, FR, GB, GR, IT, LI, LU, NL, SE**

**1.** Agent édulcorant, de formule générale :

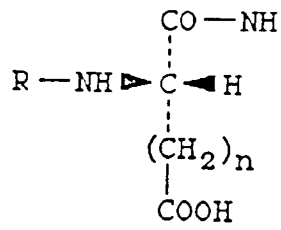

(I)

dans laquelle :
R est un groupe acyle de formule :

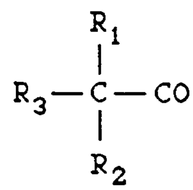

dans laquelle :
$R_1$ est un radical méthyle, éthyle, propyle, isopropyle, phényle, méthoxy, éthoxy, trihalogénométhyle, chloro ou chlorométhyle;
$R_2$ est un atome d'hydrogène ou un radical méthyle, éthyle ou méthoxy;
ou bien dans laquelle $R_1$ et $R_2$ pris ensemble avec l'atome de carbone auquel ils sont liés forment un groupe cycloalkyle ayant de 3 à 6 atomes de carbone ;
$R_3$ est un radical alkyle ayant de 3 à 11 atomes de carbone, un radical alcényle ayant de 3 à 7 atomes de carbone, un radical cycloalkyle ayant de 3 à 7 atomes de carbone, un radical cycloalkylalkyle dont la partie cycloalkyle présente de 3 à 6 atomes de carbone et la partie alkyle présente de 1 à 3 atomes de carbone, un radical phényle, un radical phénylalkyle dont la partie alkyle présente de 1 à 3 atomes de carbone, un radical alcoxy ayant de 3 à 10 atomes de carbone, un radical cycloalkyloxy ayant de 3 à 6 atomes de carbone et dont les deux positions adjacentes au carbone 1 fixé à l'oxygène peuvent chacune être substituées par 1 ou 2 groupes méthyle, un radical cycloalkylalcoxy dont la partie cycloalkyle présente de 3 à 6 atomes de carbone et la partie alcoxy présente de 1 à 3 atomes de carbone, un radical phénoxy, un radical phénylalcoxy dont la partie alcoxy présente de 1 à 3 atomes de carbone ;
n est égal à 1 ou 2 ;
R' est un groupe de formule

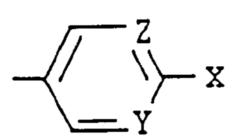

dans laquelle Y et Z, identiques ou différents, représentent N ou CH, et dans laquelle X est choisi dans le groupe constitué par CN, $NO_2$, Cl, $CF_3$, $COOCH_3$, $COCH_3$, $COCF_3$, $CONH_2$, $CON(CH_3)_2$, $SO_2CH_3$, $N_3$ ou H ;
ainsi que ses sels physiologiquement acceptables.

2. Agent édulcorant selon la revendication 1, caractérisé en ce que :
$R_1$ est un radical méthyle, éthyle, phényle, méthoxy, éthoxy, trifluorométhyle, chloro ou chlorométhyle ;
$R_2$ est un atome d'hydrogène ou un radical méthyle ou éthyle ;
ou bien dans laquelle $R_1$ et $R_2$ pris ensemble avec l'atome de carbone auquel ils sont liés forment un groupe cyclopropyle, cyclobutyle ou cyclopentyle ;
$R_3$ est un radical alkyle normal ayant de 3 à 5 atomes de carbone, un radical alkyle ramifié ayant de 3 à 7 atomes de carbone, un radical alcényle ayant de 3 à 7 atomes de carbone, un radical cycloalkyle ayant de 3 à 6 atomes de carbone, un radical cycloalkylméthyle ou cycloalkyléthyle dont la partie cycloalkyle présente de 3 à 6 atomes de carbone, un radical phényle, un radical phénylméthyle, un radical phényléthyle ou phénylisopropyle, un radical alcoxy ayant de 3 à 6 atomes de carbone, un radical cycloalkyloxy ayant de 3 à 6 atomes de carbone, un radical cycloalkylméthoxy dont la partie cycloalkyle présente de 3 à 6 atomes de carbone, un radical phénoxy, un radical phénylméthoxy ou phényléthoxy ;
n et R' étant définis comme précédemment.

3. Agent édulcorant selon la revendication 1, caractérisé en ce que :
$R_1$ est choisi dans le groupe constitué par $CH_3$, $C_2H_5$, $C_6H_5$ ou $CH_3O$ ;
$R_2$ est choisi dans le groupe constitué par H ou $CH_3$ ;
ou bien dans laquelle $R_1$ et $R_2$ pris ensemble avec l'atome de carbone auquel ils sont liés forment un groupe cyclopropyle ;
$R_3$ est choisi dans le groupe constitué par $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5$, $C_6H_5CH_2$, c-$C_6H_{11}O$ ou $C_6H_5O$.

4. Agent édulcorant selon la revendication 1, caractérisé en ce que :
$R_1$ est choisi dans le groupe constitué par $CH_3$, $C_2H_5$ ;
$R_2$ est H ou $CH_3$ ;
$R_3$ est choisi dans le groupe constitué par $CH_3(CH_2)_3$, $CH_3(CH_2)_4$, c-$C_6H_{11}O$ ou $C_6H_5O$.

5. Agent édulcorant selon l'une des revendications précédentes, caractérisé en ce que le groupe acyle R est un radical de configuration :

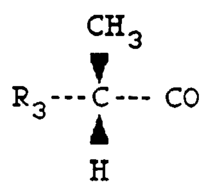

dans laquelle $R_3$ est défini comme précédemment.

6. Agent édulcorant selon L'une des revendications précédentes, caractérisé en ce que n est égal à 2.

7. Agent édulcorant selon l'une des revendications précédentes, caractérisé en ce que R' est un radical de formule :

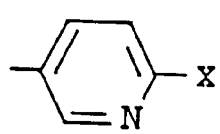

dans laquelle X est défini comme précédemment.

8. Agent édulcorant selon l'une des revendications précédentes, caractérisé en ce que n est égal à 2 et R' est un radical de formule :

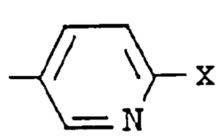

dans laquelle X est défini comme précédemment.

9. Agent édulcorant selon l'une des revendications précédentes, caractérisé en ce que X est un groupe CN.

10. Agent édulcorant selon l'une des revendications précédentes, caractérisé en ce qu'il se présente sous forme d'un sel de sodium, potassium, ammonium, calcium ou magnésium.

**11.** Agent édulcorant selon la revendication 1, caractérisé en ce qu'il répond à la formule :

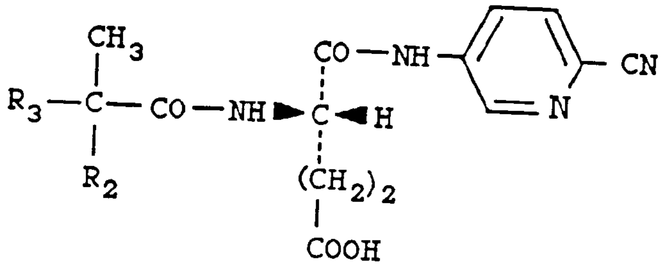

dans laquelle $R_2$ est H ou $CH_3$ et $R_3$ est défini comme précédemment.

**12.** Agent édulcorant selon la revendication 11 caractérisé en ce que $R_3$ est le groupe n-butyle.

**13.** Agent édulcorant selon la revendication 11, caractérisé en ce que $R_3$ est le groupe phénoxy.

**14.** Agent édulcorant selon la revendication 11, caractérisé en ce qu'il s'agit du N-[(S)-2-méthylhexanoyl]-alpha-L-glutamyl-5-amino-2-pyridinecarbonitrile.

**15.** Agent édulcorant selon la revendication 11, caractérisé en ce qu'il s'agit du N-(2,2-diméthylhexanoyl)-alpha-L-glutamyl-5-amino-2-pyridinecarbonitrile.

**16.** Agent édulcorant selon la revendication 11, caractérisé en ce qu'il s'agit du N-[(R)-2-phénoxypropanoyl]-alpha-L-glutamyl-5-amino-2-pyridinecarbonitrile.

**17.** Procédé de préparation d'un agent édulcorant selon la revendication 1, caractérisé en ce qu'il comprend la réaction, dans un ordre quelconque, entre :

. d'une part, l'acide L-aspartique ou l'acide L-glutamique, dont respectivement le groupe bêta ou gamma-carboxyle est éventuellement protégé, et

. d'autre part :

- un acide de formule

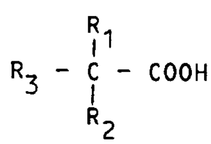

ou son chlorure d'acide ;

- et une amine de formule $H_2N$-R' ;
- $R_1$, $R_2$, $R_3$ et R' étant tels que définis dans la revendication 1;

de façon à créer ainsi deux liaisons amidiques au niveau des groupes alpha-amino et alpha-carboxyle de l'acide L-aspartique ou de l'acide L-glutamique ;

et la transformation éventuelle du produit ainsi obtenu en un sel physiologiquement acceptable, tel qu'un sel de sodium, potassium, ammonium, calcium ou magnésium.

**18.** Procédé selon la revendication 17, caractérisé en ce que la protection préalable du groupe bêta-carboxyle de l'acide L-aspartique ou du groupe gamma-carboxyle de l'acide L-glutamique est réalisée par formation :

- d'un ester, notamment d'un ester tert-butylique ou d'un ester benzylique ; ou
- d'un anhydride de formule :

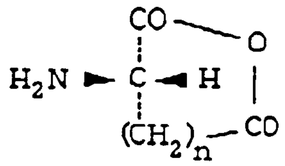

dont le groupe amino est éventuellement salifié ou protégé.

**19.** Procédé selon la revendication 17, caractérisé en ce qu'il comprend :

a) la réaction de l'acide L-aspartique ou de l'acide L-glutamique avec une amine de formule (III), pour la préparation d'un dérivé 15 amino de formule (II) selon la réaction :

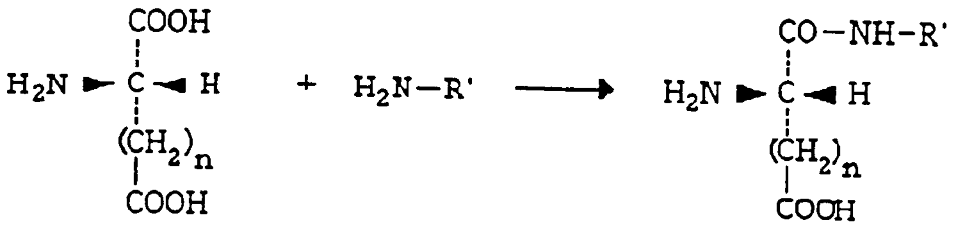

(n = 1 ou 2) (III) (II)

b) la réaction du dérivé amino (II) obtenu à l'étape a) avec un chlorure d'acide de formule (IV), selon la réaction :

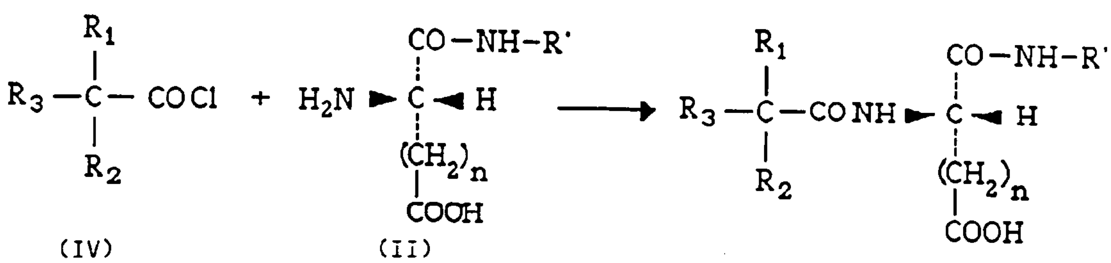

(IV) (II)

**20.** Procédé selon la revendication 17, caractérisé en ce qu'il comprend :

a) la réaction de l'acide L-aspartique ou de l'acide L-glutamique avec un chlorure d'acide de formule (IV) selon la réaction :

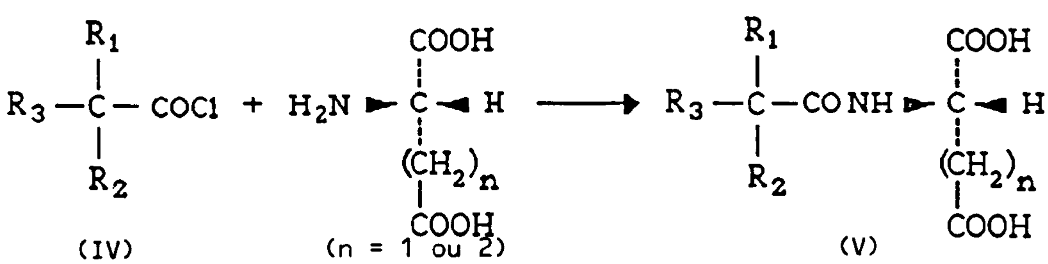

(IV) (n = 1 ou 2) (V)

b) la réaction entre le dérivé (V) ainsi obtenu et une amine de formule (III) selon la réaction :

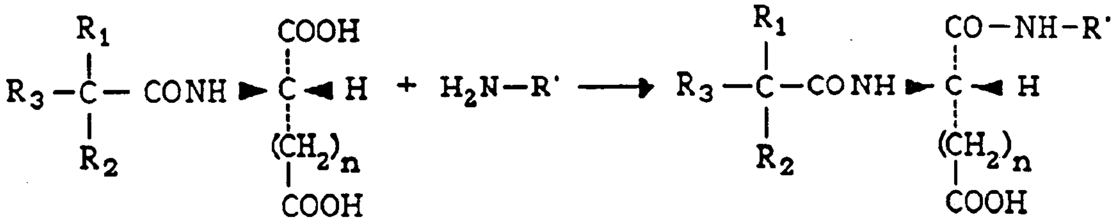

(V) (III)

étant entendu que le groupe bêta-carboxyle de l'acide L-aspartique ou le groupe gamma-carboxyle de l'acide L-glutamique est éventuellement protégé préalablement à la réaction a) et déprotégé après la réaction b).

**Revendications pour l'Etat contractant suivant : ES**

1. Agent édulcorant, de formule générale :

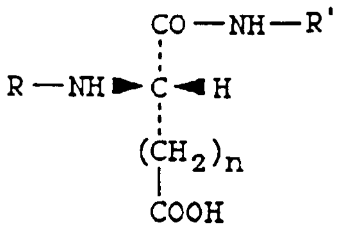

(I)

dans laquelle :
R est un groupe acyle de formule :

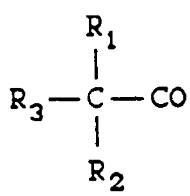

dans laquelle :
$R_1$ est un radical méthyle, éthyle, propyle, isopropyle, phényle, méthoxy, ethoxy, trihalogénométhyle, chloro ou chlorométhyle;
$R_2$ est un atome d'hydrogène ou un radical méthyle, éthyle ou méthoxy;
ou bien dans laquelle $R_1$ et $R_2$ pris ensemble avec l'atome de carbone auquel ils sont liés forment un groupe cycloalkyle ayant de 3 à 6 atomes de carbone ;
$R_3$ est un radical alkyle ayant de 3 à 11 atomes de carbone, un radical alcényle ayant de 3 à 7 atomes de carbone, un radical cycloalkyle ayant de 3 à 7 atomes de carbone, un radical cycloalkylalkyle dont la partie cycloalkyle présente de 3 à 6 atomes de carbone et la partie alkyle présente de 1 à 3 atomes de carbone, un radical phényle, un radical phénylalkyle dont la partie alkyle présente de 1 à 3 atomes de carbone, un radical alcoxy ayant de 3 à 10 atomes de carbone, un radical cycloalkyloxy ayant de 3 à 6 atomes de carbone et dont les deux positions adjacentes au carbone 1 fixé à l'oxygène peuvent chacune être substituées par 1 ou 2 groupes méthyle, un radical cycloalkylalcoxy dont la partie cycloalkyle présente de 3 à 6 atomes de carbone et la partie alcoxy présente de 1 à 3 atomes de carbone, un radical phénoxy, un radical phénylalcoxy dont la partie alcoxy présente de 1 à 3 atomes de carbone ;
n est égal à 1 ou 2 ;
R' est un groupe de formule

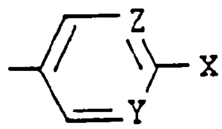

dans laquelle Y et Z, identiques ou différents, représentent N ou CH, et dans laquelle X est choisi dans le groupe constitué par CN, $NO_2$, Cl, $CF_3$, $COOCH_3$, $COCH_3$, $COCF_3$, $CONH_2$, $CON(CH_3)_2$, $SO_2CH_3$, $N_3$ ou H ;
ainsi que ses sels physiologiquement acceptables.

2. Agent édulcorant selon la revendication 1, caractérisé en ce que :
$R_1$ est un radical méthyle, éthyle, phényle, méthoxy, éthoxy, trifluorométhyle, chloro ou chlorométhyle ;
$R_2$ est un atome d'hydrogène ou un radical méthyle ou éthyle ;
ou bien dans laquelle $R_1$ et $R_2$ pris ensemble avec l'atome de carbone auquel ils sont liés forment un groupe cyclopropyle, cyclobutyle ou cyclopentyle ;
$R_3$ est un radical alkyle normal ayant de 3 à 5 atomes de carbone, un radical alkyle ramifié ayant de 3 à 7 atomes de carbone, un radical alcényle ayant de 3 à 7 atomes de carbone, un radical cycloalkyle ayant de 3 à 6 atomes de carbone, un radical cycloalkylméthyle ou cycloalkyléthyle dont la partie cycloalkyle présente de 3 à 6 atomes de carbone, un radical phényle, un radical phénylméthyle, un radical phényléthyle ou phénylisopropyle, un radical alcoxy ayant de 3 à 6 atomes de carbone, un radical cycloalkyloxy ayant de 3 à 6 atomes de carbone, un radical cycloalkylméthoxy dont la partie cycloalkyle présente de 3 à 6 atomes de carbone, un radical phénoxy, un radical phénylméthoxy ou phényléthoxy ;
n et R' étant définis comme précédemment.

3. Agent édulcorant selon la revendication 1, caractérisé en ce que :
$R_1$ est choisi dans le groupe constitué par $CH_3$, $C_2H_5$, $C_6H_5$ ou $CH_3O$ ;
$R_2$ est choisi dans le groupe constitué par H ou $CH_3$ ;
ou bien dans laquelle $R_1$ et $R_2$ pris ensemble avec l'atome de carbone auquel ils sont liés forment un groupe cyclopropyle ;
$R_3$ est choisi dans le groupe constitué par $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5$, $C_6H_5CH_2$, c-$C_6H_{11}O$ ou $C_6H_5O$.

4. Agent édulcorant selon la revendication 1, caractérisé en ce que :
$R_1$ est choisi dans le groupe constitué par $CH_3$, $C_2H_5$ ;
$R_2$ est H ou $CH_3$ ;
$R_3$ est choisi dans le groupe constitué par $CH_3(CH_2)_3$, $CH_3(CH_2)_4$, c-$C_6H_{11}O$ ou $C_6H_5O$.

5. Agent édulcorant selon l'une des revendications précédentes, caractérisé en ce que le groupe acyle R est un radical de configuration :

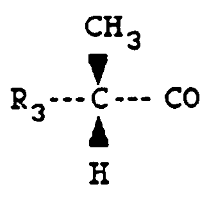

dans laquelle $R_3$ est défini comme précédemment.

6. Agent édulcorant selon l'une des revendications précédentes, caractérisé en ce que n est égal à 2.

7. Agent édulcorant selon l'une des revendications précédentes, caractérisé en ce que R' est un radical de formule :

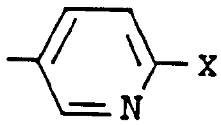

dans laquelle X est défini comme précédemment.

8. Agent édulcorant selon l'une des revendications précédentes, caractérisé en ce que n est égal à 2 et R' est un radical de formule :

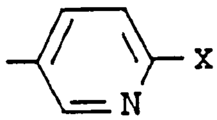

dans laquelle X est défini comme précédemment.

9. Agent édulcorant selon l'une des revendications précédentes, caractérisé en ce que X est un groupe CN.

10. Agent édulcorant selon l'une des revendications précédentes, caractérisé en ce qu'il se présente sous forme d'un sel de sodium, potassium, ammonium, calcium ou magnésium.

11. Agent édulcorant selon la revendication 1, caractérisé en ce qu'il répond à la formule :

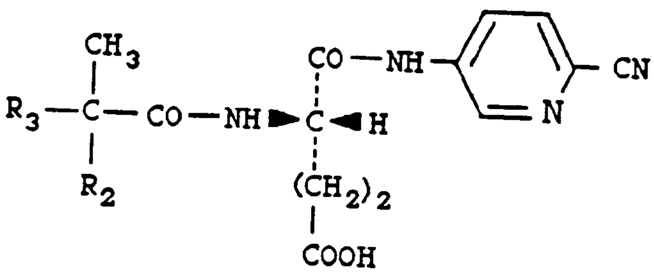

dans laquelle $R_2$ est H ou $CH_3$ et $R_3$ est défini comme précédemment.

12. Agent édulcorant selon la revendication 11 caractérisé en ce que $R_3$ est le groupe n-butyle.

13. Agent édulcorant selon la revendication 11, caractérisé en ce que $R_3$ est le groupe phénoxy.

14. Agent édulcorant selon la revendication 11, caractérisé en ce qu'il s'agit du N-[(S)-2-méthylhexanoyl]-alpha-L-glutamyl-5-amino-2-pyridinecarbonitrile.

15. Agent édulcorant selon la revendication 11, caractérisé en ce qu'il s'agit du N-(2,2-diméthylhexanoyl)-alpha-L-glutamyl-5-amino-2-pyridinecarbonitrile.

16. Agent édulcorant selon la revendication 11, caractérisé en ce qu'il s'agit du N-[(R)-2-phénoxypropanoyl]-alpha-L-glutamyl-5-amino-2-pyridinecarbonitrile.

17. Procédé de préparation d'un agent édulcorant de formule générale :

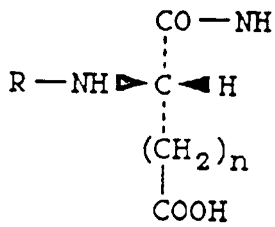

(I)

dans laquelle :
R est un groupe acyle de formule :

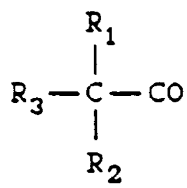

dans laquelle :
$R_1$ est un radical méthyle, éthyle, propyle, isopropyle, phényle, méthoxy, éthoxy, trihalogénométhyle, chloro ou chlorométhyle;
$R_2$ est un atome d'hydrogène ou un radical méthyle, éthyle ou méthoxy;
ou bien dans laquelle $R_1$ et $R_2$ pris ensemble avec l'atome de carbone auquel ils sont liés forment un groupe cycloalkyle ayant de 3 à 6 atomes de carbone ;
$R_3$ est un radical alkyle ayant de 3 à 11 atomes de carbone, un radical alcényle ayant de 3 à 7 atomes de carbone, un radical cycloalkyle ayant de 3 à 7 atomes de carbone, un radical cycloalkylalkyle dont la partie cycloalkyle présente de 3 à 6 atomes de carbone et la partie alkyle présente de 1 à 3 atomes de carbone, un radical phényle, un radical phénylalkyle dont la partie alkyle présente de 1 à 3 atomes de carbone, un radical alcoxy ayant de 3 à 10 atomes de carbone, un radical cycloalkyloxy ayant de 3 à 6 atomes de carbone et dont les deux positions adjacentes au carbone 1 fixé à l'oxygène peuvent chacune être substituées par 1 ou 2 groupes méthyle, un radical cycloalkylalcoxy dont la partie cycloalkyle présente de 3 à 6 atomes de carbone et la partie alcoxy présente de 1 à 3 atomes de carbone, un radical phénoxy, un radical phénylalcoxy dont la partie alcoxy présente de 1 à 3 atomes de carbone ;
n est égal à 1 ou 2 ;
R' est un groupe de formule

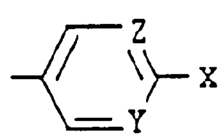

dans Laquelle Y et Z, identiques ou différents, représentent N ou CH, et dans laquelle X est choisi dans le groupe constitué par CN, $NO_2$, Cl, $CF_3$, $COOCH_3$, $COCH_3$, $COCF_3$, $CONH_2$, $CON(CH_3)_2$, $SO_2CH_3$, $N_3$ ou H ;
ainsi que ses sels physiologiquement acceptables ;
caractérisé en ce qu'il comprend la réaction, dans un ordre quelconque, entre:

. d'une part, l'acide L-aspartique ou l'acide L-glutamique, dont respectivement le groupe bêta ou gamma-carboxyle est éventuellement protégé, et
. d'autre part :
    - un acide de formule

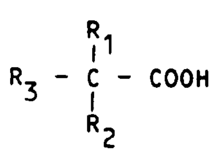

ou son chlorure d'acide ;
- et une amine de formule $H_2N$-R' ;
- $R_1$, $R_2$, $R_3$ et R' étant tels que définis dans la revendication 1 ;

de façon à créer ainsi deux liaisons amidiques au niveau des groupes alpha-amino et alpha-carboxyle de l'acide L-aspartique ou de l'acide L-glutamique ;
et la transformation éventuelle du produit ainsi obtenu en un sel physiologiquement acceptable, tel qu'un sel de sodium, potassium, ammonium, calcium ou magnésium.

**18.** Procédé selon la revendication 17, caractérisé en ce que la protection préalable du groupe bêta-carboxyle de l'acide L-aspartique ou du groupe gamma-carboxyle de l'acide L-glutamique est réalisée par formation :
- d'un ester, notamment d'un ester tert-butylique ou d'un ester benzylique ; ou
- d'un anhydride de formule :

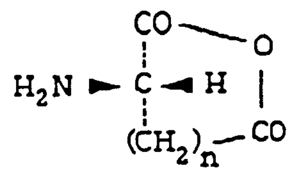

dont le groupe amino est éventuellement salifié ou protégé.

**19.** Procédé selon la revendication 17, caractérisé en ce qu'il comprend :
a) la réaction de l'acide L-aspartique ou de l'acide L-glutamique avec une amine de formule (III), pour la préparation d'un dérivé amino de formule (II) selon la réaction :

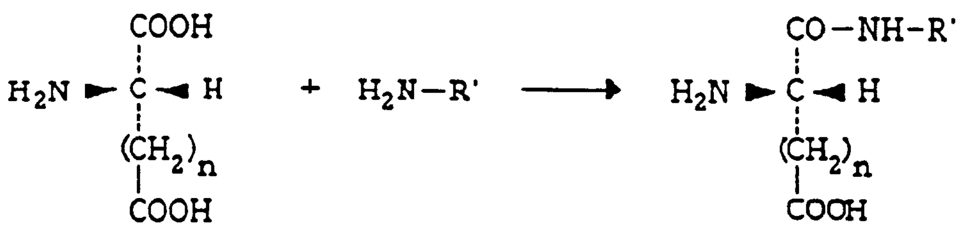

(n = 1 ou 2) (III) (II)

b) la réaction du dérivé amino (II) obtenu à l'étape a) avec un chlorure d'acide de formule (IV), selon la réaction :

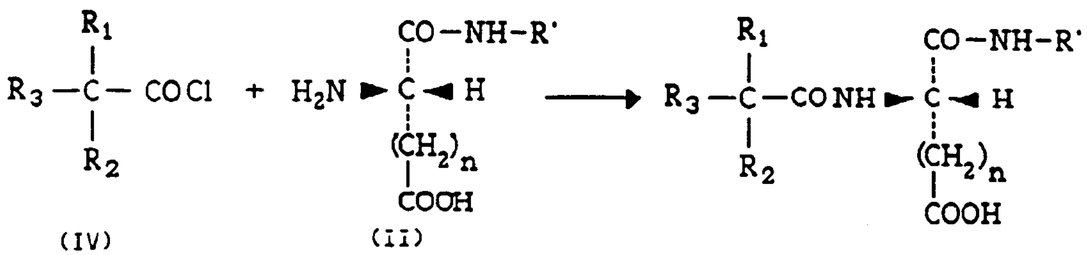

(IV) (II)

**20.** Procédé selon la revendication 17, caractérisé en ce qu'il comprend :
a) la réaction de l'acide L-aspartique ou de l'acide L-glutamique avec un chlorure d'acide de formule (IV) selon la réaction :

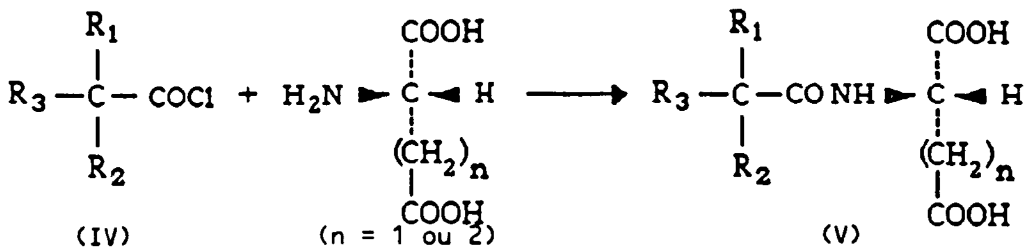

(IV) (n = 1 ou 2) (V)

b) la réaction entre le dérivé (V) ainsi obtenu et une amine de formule (III) selon la réaction :

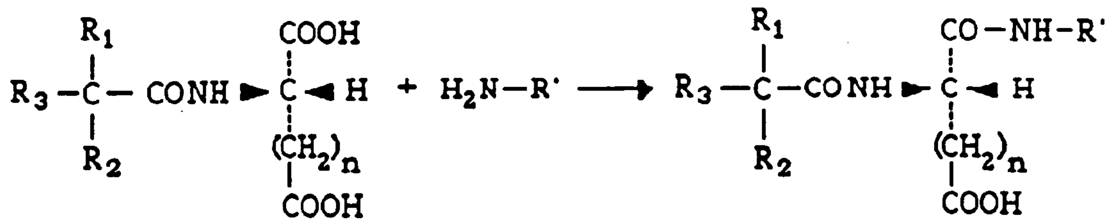

(V) (III)

étant entendu que le groupe bêta-carboxyle de l'acide L-aspartique ou le groupe gamma-carboxyle de l'acide L-glutamique est éventuellement protégé préalablement à la réaction a) et déprotegé après la réaction b).

## Claims

### Claims for the following Contracting States : AT, BE, CH, DE, DK, FR, GB, GR, IT, LI, LU, NL, SE

1. Sweetening agent of the general formula:

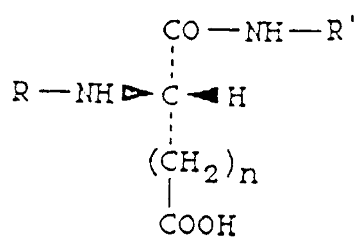

(I)

in which:
R is an acyl group of the formula:

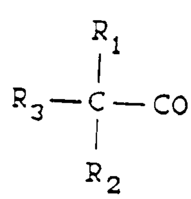

in which:
$R_1$ is a methyl, ethyl, propyl, isopropyl, phenyl, methoxy, ethoxy, trihalogenomethyl, chloro or chloromethyl radical;
$R_2$ is a hydrogen atom or a methyl, ethyl or methoxy radical; or in which $R_1$ and $R_2$, taken together with

the carbon atom to which they are bonded, form a cycloalkyl group having from 3 to 6 carbon atoms;
$R_3$ is an alkyl radical having from 3 to 11 carbon atoms, an alkenyl radical having from 3 to 7 carbon atoms, a cycloalkyl radical having from 3 to 7 carbon atoms, a cycloalkylalkyl radical of which the cycloalkyl part has from 3 to 6 carbon atoms and the alkyl part has from 1 to 3 carbon atoms, a phenyl radical, a phenylalkyl radical of which the alkyl part has from 1 to 3 carbon atoms, an alkoxy radical having from 3 to 10 carbon atoms, a cycloalkoxy radical having from 3 to 6 carbon atoms, in which the two positions adjacent to carbon 1 attached to the oxygen can each be substituted by 1 or 2 methyl groups, a cycloalkylalkoxy radical of which the cycloalkyl part has from 3 to 6 carbon atoms and the alkoxy part has from 1 to 3 carbon atoms, a phenoxy radical, a phenylalkoxy radical of which the alkoxy part has from 1 to 3 carbon atoms;
n is equal to 1 or 2;
R' is a group of the formula

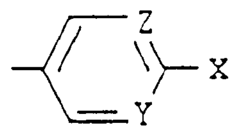

in which Y and Z, which are identical or different, are N or CH, and in which X is selected from the group consisting of CN, $NO_2$, Cl, $CF_3$, $COOCH_3$, $COCH_3$, $COCF_3$, $CONH_2$, $CON(CH_3)_2$, $SO_2CH_3$, N or H;
and its physiologically acceptable salts.

**2.** Sweetening agent according to claim 1, characterized in that:
$R_1$ is a methyl, ethyl, phenyl, methoxy, ethoxy, trifluoromethyl, chloro or chloromethyl radical;
$R_2$ is a hydrogen atom or a methyl or ethyl radical; or in which $R_1$ and $R_2$, taken together with the carbon atom to which they are bonded, form a cyclopropyl, cyclobutyl or cyclopentyl group;
$R_3$ is a normal alkyl radical having from 3 to 5 carbon atoms, a branched alkyl radical having from 3 to 7 carbon atoms, an-alkenyl radical having from 3 to 7 carbon atoms, a cycloalkyl radical having from 3 to 6 carbon atoms, a cycloalkylmethyl or cycloalkylethyl radical of which the cycloalkyl part has from 3 to 6 carbon atoms, a phenyl radical, a phenylmethyl radical, a phenylethyl or phenylisopropyl radical, an alkoxy radical having from 3 to 6 carbon atoms, a cycloalkoxy radical having from 3 to 6 carbon atoms, a cycloalkylmethoxy radical of which the cycloalkyl part has from 3 to 6 carbon atoms, a phenoxy radical, a phenylmethoxy or phenylethoxy radical;
n and R' being as defined above.

**3.** Sweetening agent according to claim 1, characterized in that:
$R_1$ is selected from the group consisting of $CH_3$, $C_2H_5$; $C_6H_5$ or $CH_3O$;
$R_2$ is selected from the group consisting of H or $CH_3$;
or in which $R_1$ and $R_2$, taken together with the carbon atom to which they are bonded, form a cyclopropyl group;
$R_3$ is selected from the group consisting of $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5$, $C_6H_5CH_2$, c-$C_6H_{11}O$ or $C_6H_5O$.

**4.** Sweetening agent according to claim 1, characterized in that:
$R_1$ is selected from the group consisting of $CH_3$, $C_2H_5$;
$R_2$ is H or $CH_3$;
$R_3$ is selected from the group consisting of $CH_3(CH_2)_3$, $CH_3(CH_2)_4$, c-$C_6H_{11}O$ or $C_6H_5O$.

**5.** Sweetening agent according to one of the preceding claims, characterized in that the acyl group R is a radical of the configuration

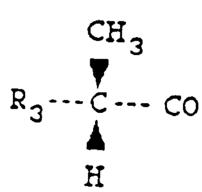

in which $R_3$ is as defined above.

6. Sweetening agent according to one of the preceding claims, characterized in that n is equal to 2.

7. Sweetening agent according to one of the preceding claims, characterized in that R' is a radical of the formula

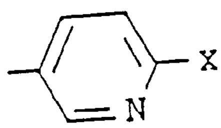

in which X is as defined above.

8. Sweetening agent according to one of the preceding claims, characterized in that n is equal to 2 and R' is a radical of the formula

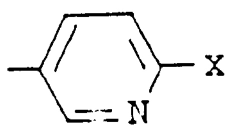

in which X is as defined above.

9. Sweetening agent according to one of the preceding claims, characterized in that X is a group CN.

10. Sweetening agent according to one of the preceding claims, characterized in that it is in the form of a sodium, potassium, ammonium, calcium or magnesium salt.

11. Sweetening agent according to claim 1, characterized in that it has the formula

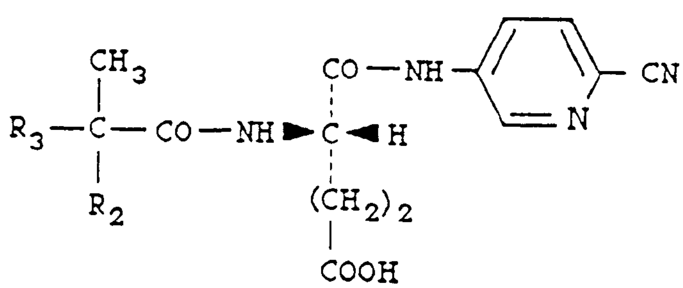

in which $R_2$ is H or $CH_3$ and $R_3$ is as defined above.

12. Sweetening agent according to claim 11, characterized in that $R_3$ is the n-butyl group.

13. Sweetening agent according to claim 11, characterized in that $R_3$ is the phenoxy group.

14. Sweetening agent according to claim 11, characterized in that it is the N-[(S)-2-methylhexanoyl]-alpha-L-glutamyl-5-aminopyridine-2-carbonitrile.

15. Sweetening agent according to claim 11, characterized in that it is the N-(2,2-dimethylhexanoyl)-alpha-L-glutamyl-5-aminopyridine-2-carbonitrile.

16. Sweetening agent according to claim 11, characterized in that it is the N-[(R)-2-phenoxypropanoyl]-alpha-L-glutamyl-5-amino-pyridine-2-carbonitrile.

17. Method of preparing a sweetening agent according to claim 1, characterized in that it comprises reacting the following with one another in any order:

. on the one hand L-aspartic acid or L-glutamic acid in which the beta- or gamma-carboxyl group, respectively, is protected if appropriate, and

. on the other hand:

- an acid of the formula

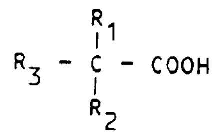

or its acid chloride;

- and an amine of the formula $H_2N-R'$;
- $R_1$, $R_2$, $R_3$ and R' being as defined in claim 1;

so as to create two amide bonds at the alpha-amino and alpha-carboxyl groups of the L-aspartic acid or L-glutamic acid; and if appropriate, converting the resulting product into a physiologically acceptable salt such as a sodium, potassium, ammonium, calcium or magnesium salt.

**18.** Method according to claim 17, characterized in that prior protection of the beta-carboxyl group of L-aspartic acid or the gamma-carboxyl group of L-glutamic acid is effected by forming:

- an ester, especially a tert-butyl ester or a benzyl ester; or
- an anhydride of the formula:

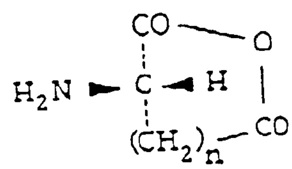

in which the amino group has been converted into a salt or protected if appropriate.

**19.** Method according to claim 17, characterized in that it comprises:

a) reacting L-aspartic acid or L-glutamic acid with an amine of formula (III) in order to prepare an amino derivative of formula (II) according to the equation:

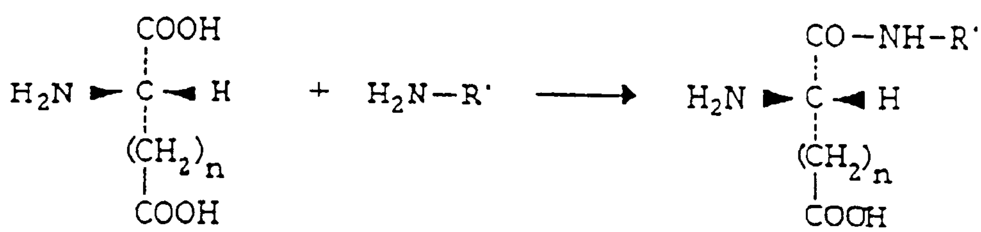

(n = 1 or 2) (III) (II)

and

b) reacting the amino derivative (II) obtained in step a) with an acid chloride of formula (IV) according to the equation:

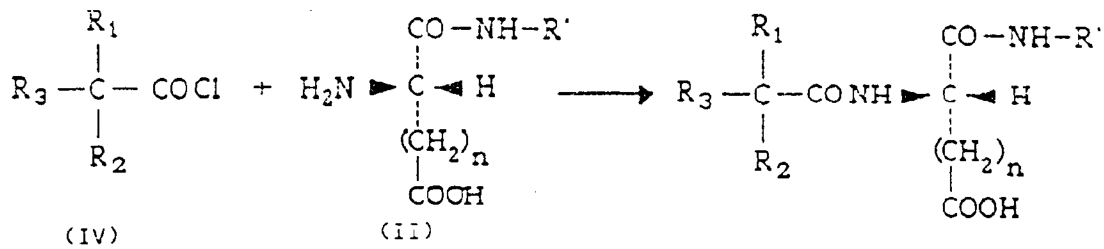

(IV) (II)

**20.** Method according to claim 17, characterized in that it comprises:

a) reacting L-aspartic acid or L-glutamic acid with an acid chloride of formula (IV) according to the equation

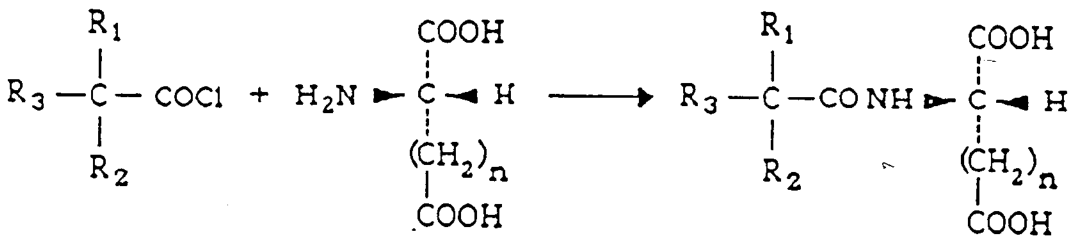

(IV) (n = 1 or 2) (V)

and

b) reacting the resulting derivative (V) with an amine of formula (III) according to the equation

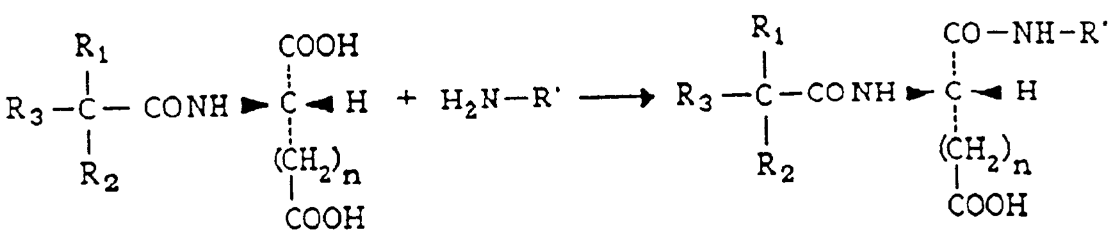

(V) (III)

it being understood that, if appropriate, the beta-carboxyl group of L-aspartic acid or the gamma-carboxyl group of L-glutamic acid is protected before reaction a) and deprotected after reaction b).

**Claims for the following Contracting State : ES**

**1.** Sweetening agent of the general formula:

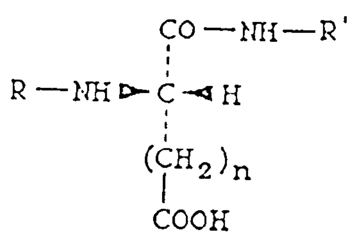

(I)

in which:

R is an acyl group of the formula:

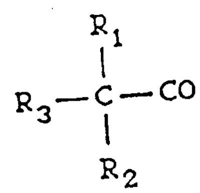

in which:
$R_1$ is a methyl, ethyl, propyl, isopropyl, phenyl, methoxy, ethoxy, trihalogenomethyl, chloro or chloromethyl radical;
$R_2$ is a hydrogen atom or a methyl, ethyl or methoxy radical; or in which $R_1$ and $R_2$, taken together with the carbon atom to which they are bonded, form a-cycloalkyl group having from 3 to 6 carbon atoms;
$R_3$ is an alkyl radical having from 3 to 11 carbon atoms, an alkenyl radical having from 3 to 7 carbon atoms, a cycloalkyl radical having from 3 to 7 carbon atoms, a cycloalkylalkyl radical of which the cycloalkyl part has from 3 to 6 carbon atoms and the alkyl part has from 1 to 3 carbon atoms, a phenyl radical, a phenylalkyl radical of which the alkyl part has from 1 to 3 carbon atoms, an alkoxy radical having from 3 to 10 carbon atoms, a cycloalkoxy radical having from 3 to 6 carbon atoms, in which the two positions adjacent to carbon 1 attached to the oxygen can each be substituted by 1 or 2 methyl groups, a cycloalkylalkoxy radical of which the cycloalkyl part has from 3 to 6 carbon atoms and the alkoxy part has from 1 to 3 carbon atoms, a phenoxy radical, a phenylalkoxy radical of which the alkoxy part has from 1 to 3 carbon atoms;
n is equal to 1 or 2;
R' is a group of the formula

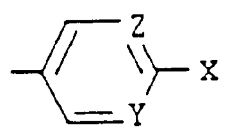

in which Y and Z, which are identical or different, are N or CH, and in which X is selected from the group consisting of CN, $NO_2$, Cl, $CF_3$, $COOCH_3$, $COCH_3$, $COCF_3$, $CONH_2$, $CON(CH_3)_2$, $SO_2CH_3$, $N_3$ or H and its physiologically acceptable salts.

2. Sweetening agent according to claim 1, characterized in that:
$R_1$ is a methyl, ethyl, phenyl, methoxy, ethoxy, trifluoromethyl, chloro or chloromethyl radical;
$R_2$ is a hydrogen atom or a methyl or ethyl radical;
or in which $R_1$ and $R_2$, taken together with the carbon atom to which they are bonded, form a cyclopropyl, cyclobutyl or cyclopentyl group;
$R_3$ is a normal alkyl radical having from 3 to 5 carbon atoms, a branched alkyl radical having from 3 to 7 carbon atoms, an alkenyl radical having from 3 to 7 carbon atoms, a cycloalkyl radical having from 3 to 6 carbon atoms, a cycloalkylmethyl or cycloalkylethyl radical of which the cycloalkyl part has from 3 to 6 carbon atoms, a phenyl radical, a phenylmethyl radical, a phenylethyl or phenylisopropyl radical, an alkoxy radical having from 3 to 6 carbon atoms, a cycloalkoxy radical having from 3 to 6 carbon atoms, a cycloalkylmethoxy radical of which the cycloalkyl part has from 3 to 6 carbon atoms, a phenoxy radical, a phenylmethoxy or phenylethoxy radical;
n and R' being as defined above.

3. Sweetening agent according to claim 1, characterized in that:
$R_1$ is selected from the group consisting of $CH_3$, $C_2H_5$; $C_6H_5$ or $CH_3O$;
$R_2$ is selected from the group consisting of H or $CH_3$;
or in which $R_1$ and $R_2$, taken together with the carbon atom to which they are bonded, form a cyclopropyl group;
$R_3$ is selected from the group consisting of $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5CH_2$, c-$C_6H_{11}O$ or $C_6H_5O$.

4. Sweetening agent according to claim 1, characterized in that:
$R_1$ is selected from the group consisting of $CH_3$, $C_2H_5$;

$R_2$ is H or $CH_3$;
$R_3$ is selected from the group consisting of $CH_3(CH_2)_3$, $CH_3(CH_2)_4$, c-$C_6H_{11}O$ or $C_6H_5O$.

5. Sweetening agent according to one of the preceding claims, characterized in that the acyl group R is a radical of the configuration:

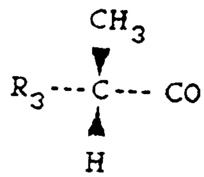

in which $R_3$ is as defined above.

6. Sweetening agent according to one of the preceding claims, characterized in that n is equal to 2.

7. Sweetening agent according to one of the preceding claims, characterized in that R' is a radical of the formula:

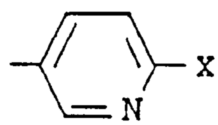

in which X is as defined above.

8. Sweetening agent according to one of the preceding claims, characterized in that n is equal to 2 and R' is a radical of the formula

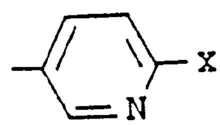

in which X is as defined above.

9. Sweetening agent according to one of the preceding claims, characterized in that X is a group CN.

10. Sweetening agent according to one of the preceding claims, characterized in that it is in the form of a sodium, potassium, ammonium, calcium or magnesium salt.

11. Sweetening agent according to claim 1, characterized in that it has the formula:

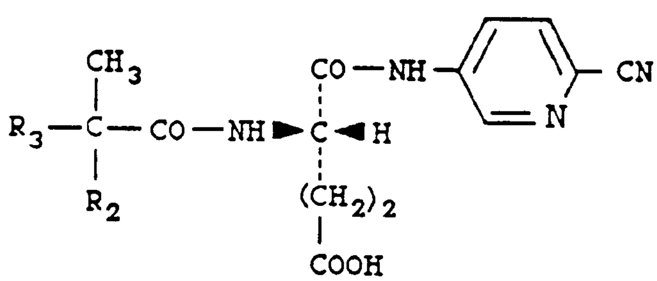

in which $R_2$ is H or $CH_3$ and $R_3$ is as defined above.

12. Sweetening agent according to claim 11, characterized in that $R_3$ is the n-butyl group.

**13.** Sweetening agent according to claim 11, characterized in that $R_3$ is the phenoxy group.

**14.** Sweetening agent according to claim 11, characterized in that it is the N-|(S)-2-methylhexanoyl]-alpha-L-glutamyl-5-aminopyridine-2-carbonitrile.

**15.** Sweetening agent according to claim 11, characterized in that it is the N-(2,2-dimethylhexanoyl)-alpha-L-glutamyl-5-aminopyridine-2-carbonitrile.

**16.** Sweetening agent according to claim 11, characterized in that it is the N-|(R)-2-phenoxypropanoyl]-alpha-L-glutamyl-5-amino-pyridine-2-carbonitrile.

**17.** Method for preparing a sweetening agent of the general formula:

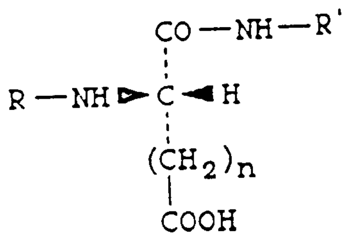

(I)

in which:
R is an acyl group of the formula:

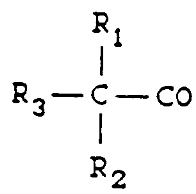

in which:
$R_1$ is a methyl, ethyl, propyl, isopropyl, phenyl, methoxy, ethoxy, trihalogenomethyl, chloro or chloromethyl radical;
$R_2$ is a hydrogen atom or a methyl, ethyl or methoxy radical;
or in which $R_1$ and $R_2$, taken together with the carbon atom to which they are bonded, form a cycloalkyl group having from 3 to 6 carbon atoms;
$R_3$ is an alkyl radical having from 3 to 11 carbon atoms, an alkenyl radical having from 3 to 7 carbon atoms, a cycloalkyl radical having from 3 to 7 carbon atoms, a cycloalkylalkyl radical of which the cycloalkyl part has from 3 to 6 carbon atoms and the alkyl part has from 1 to 3 carbon atoms, a phenyl radical, a phenylalkyl radical of which the alkyl part has from 1 to 3 carbon atoms, an alkoxy radical having from 3 to 10 carbon atoms, a cycloalkoxy radical having from 3 to 6 carbon atoms, in which the two positions adjacent to carbon 1 attached to the oxygen can each be substituted by 1 or 2 methyl groups, a cycloalkylalkoxy radical of which the cycloalkyl part has from 3 to 6 carbon atoms and the alkoxy part has from 1 to 3 carbon atoms, a phenoxy radical, a phenylalkoxy radical of which the alkoxy part has from 1 to 3 carbon atoms;
n is equal to 1 or 2;
R' is a group of the formula;

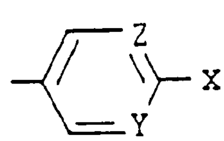

in which Y and Z, which are identical or different, are N or CH, and in which X is selected from the group consisting of CN, $NO_2$, Cl, $CF_3$, $COOCH_3$, $COCH_3$, $COCF_3$, $CONH_2$, $CON(CH_3)_2$, $SO_2CH_3$, N or H; and its physiologically acceptable salts;
characterized in that it comprises reacting the following with one another in any order:

. on the one hand L-aspartic acid or L-glutamic acid in which the beta- or gamma-carboxyl group, respectively is protected if appropriate, and
. and on the other hand:
  - an acid of the formula:

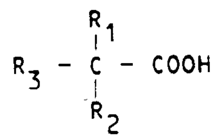

  or its acid chloride;
  - and an amine of the formula $H_2N$-R';
  - $R_1$, $R_2$, $R_3$ and R' being as defined in claim 1;

so as to create two amide bonds at the alpha-amino and alpha-carboxyl groups of the L-aspartic acid or L-glutamic acid; and if appropriate, converting the resulting product into a physiologically acceptable salt such as a sodium, potassium, ammonium, calcium or magnesium salt.

**18.** Method according to claim 17, characterized in that prior protection of the beta-carboxyl group of L-aspartic acid or the gamma-carboxyl group of L-glutamic acid is effected by forming:
- an ester, especially a tert-butyl ester or a benzyl ester; or
- an anhydride of the formula:

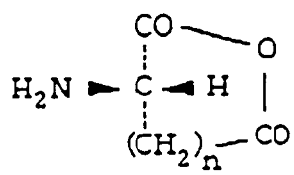

in which the amino group has been converted into a salt or protected if appropriate.

**19.** Method according to claim 17, characterized in that it comprises:
a) reacting L-aspartic acid or L-glutamic acid with an amine of formula (III) in order to prepare an amino derivative of formula (II) according to the equation

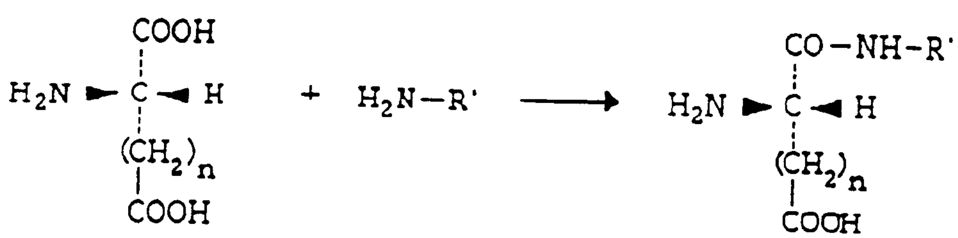

(n = 1 or 2) (III) (II)

and
b) reacting the amino derivative (II) obtained in step a) with an acid chloride of formula (IV) according to the equation

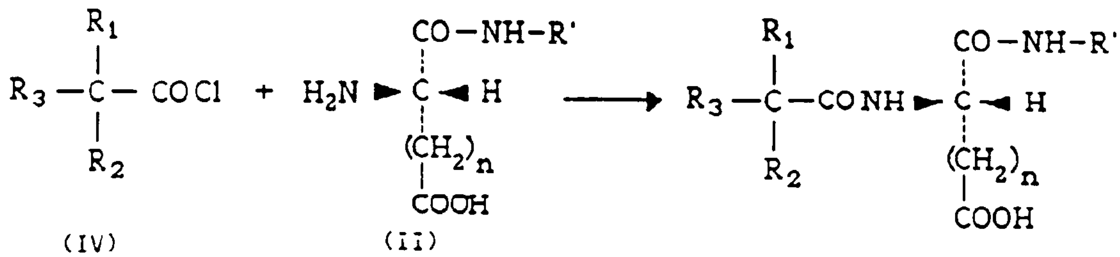

(IV) (II)

**20.** Method according to claim 17, characterized in that it comprises:

a) reacting L-aspartic acid or L-glutamic acid with an acid chloride of formula (IV) according to the equation

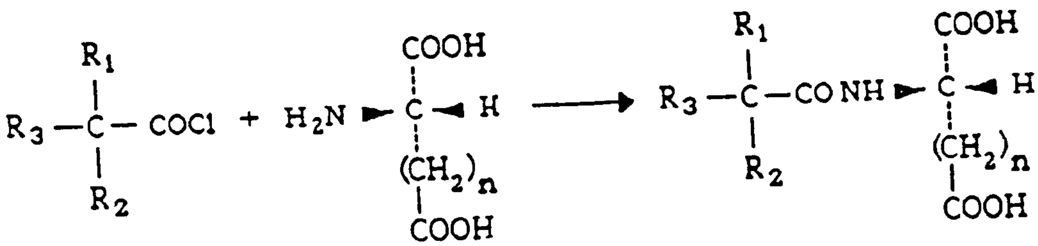

(IV) (n = 1 or 2) (V)

and

b) reacting the resulting derivative (V) with an amine of formula (III) according to the equation

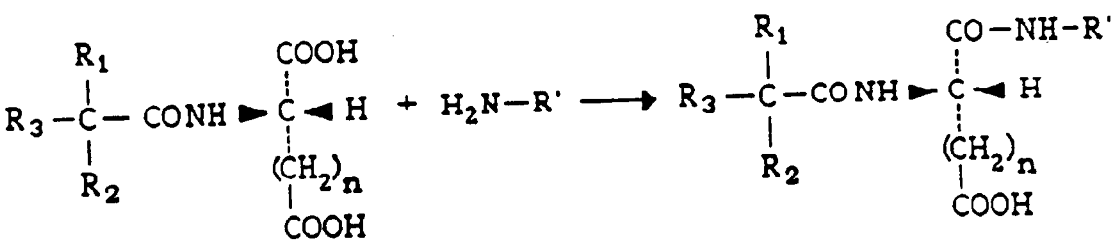

(V) (III)

it being understood that, if appropriate, the beta-carboxyl group of L-aspartic acid or the gamma-carboxyl group of L-glutamic acid is protected before reaction a) and deprotected after reaction b).

## Patentansprüche

### Patentansprüche für folgende Vertragsstaaten : AT, BE, CH, DE, DK, FR, GB, GR, IT, LI, LU, NL, SE

**1.** Süßstoff der allgemeinen Formel

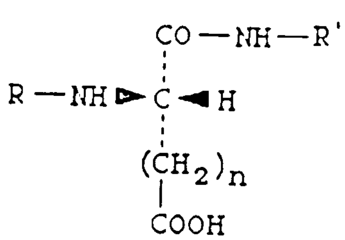

(I)

worin
R eine Acylgruppe der Formel ist

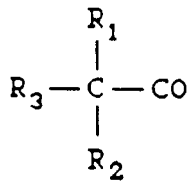

worin $R_1$ ein Methyl-, Ethyl-, Propyl-, Isopropyl-, Phenyl, Methoxy-, Ethoxy-, Trihalogenmethyl-, Chlor- oder Chlormethylrest ist;
$R_2$ ein Wasserstoffatom oder ein Methyl-, Ethyl- oder Methoxyrest ist;
oder auch worin $R_1$ und $R_2$ zusammen mit dem Kohlenstoffatom, an das sie gebunden sind, eine Cycloalkylgruppe mit 3 bis 6 Kohlenstoffatomen bilden;
$R_3$ ein Alkylrest mit 3 bis 11 Kohlenstoffatomen, ein Alkenylrest mit 3 bis 7 Kohlenstoffatomen, ein Cycloalkylrest mit 3 bis 7 Kohlenstoffatomen, ein Cycloalkylalkylrest, dessen Cycloalkylteil 3 bis 6 Kohlenstoffatome aufweist und dessen Alkylteil 1 bis 3 Kohlenstoffatome aufweist, ein Phenylrest, ein Phenylalkylrest, dessen Alkylteil 1 bis 3 Kohlenstoffatome aufweist, ein Alkoxyrest mit 3 bis 10 Kohlenstoffatomen, ein Cycloalkyloxyrest mit 3 bis 6 Kohlenstoffatomen, dessen zwei an den Kohlenstoff 1, der an den Sauerstoff gebunden ist, angrenzende Positionen jede durch 1 oder 2 Methylgruppen substituiert sein können, ein Cycloalkylalkoxyrest, dessen Cycloalkylteil 3 bis 6 Kohlenstoffatome aufweist und dessen Alkoxyteil 1 bis 3 Kohlenstoffatome aufweist, ein Phenoxyrest, ein Phenylalkoxyrest, dessen Alkoxyteil 1 bis 3 Kohlenstoffatome aufweist, ist;
n 1 oder 2 ist;
R' eine Gruppe der Formel ist

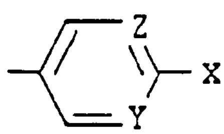

worin Y und Z, gleich oder verschieden, N oder CH darstellen und worin X aus der von CN, $NO_2$, Cl, $CF_3$, $COOCH_3$, $COCH_3$, $COCF_3$, $CONH_2$, $CON(CH_3)_2$, $SO_2CH_3$, $N_3$ oder H gebildeten Gruppe ausgewählt ist; sowie dessen physiologisch annehmbaren Salze.

2. Süßstoff nach Anspruch 1, dadurch gekennzeichnet, daß $R_1$ ein Methyl-, Ethyl-, Phenyl-, Methoxy-, Ethoxy-, Trifluormethyl-, Chlor- oder Chlormethylrest ist;
$R_2$ ein Wasserstoffatom oder ein Methyl- oder Ethylrest ist; oder auch worin $R_1$ und $R_2$ mit dem Kohlenstoffatom, an das sie gebunden sind, zusammen eine Cyclopropyl-, Cyclobutyl- oder Cyclopentylgruppe bilden;
$R_3$ ein geradkettiger Alkylrest mit 3 bis 5 Kohlenstoffatomen, ein verzweigter Alkylrest mit 3 bis 7 Kohlenstoffatomen, ein Alkenylrest mit 3 bis 7 Kohlenstoffatomen, ein Cycloalkylrest mit 3 bis 6 Kohlenstoffatomen, ein Cycloalkylmethyl- oder Cycloalkylethylrest, dessen Cycloalkylteil 3 bis 6 Kohlenstoffatome aufweist, ein Phenylrest, ein Phenylmethylrest, ein Phenylethyl- oder Phenylisopropylrest, ein Alkoxyrest mit 3 bis 6 Kohlenstoffatomen, ein Cycloalkyloxyrest mit 3 bis 6 Kohlenstoffatomen, ein Cycloalkylmethoxyrest, dessen Cycloalkylteil 3 bis 6 Kohlenstoffatome aufweist, ein Phenoxyrest, ein Phenylmethoxy- oder Phenylethoxyrest ist; und
n und R' wie zuvor definiert sind.

3. Süßstoff nach Anspruch 1, dadurch gekennzeichnet, daß $R_1$ aus der von $CH_3$, $C_2H_5$, $C_6H_5$ oder $CH_3O$ gebildeten Gruppe ausgewählt ist;
$R_2$ aus der von H oder $CH_3$ gebildeten Gruppe ausgewählt ist; oder auch daß $R_1$ und $R_2$ mit dem Kohlenstoffatom, an das sie gebunden sind, zusammen eine Cyclopropylgruppe bilden;
$R_3$ aus der von $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5$, $C_6H_5CH_2$, c-$C_6H_{11}O$ oder $C_6H_5O$ gebildeten Gruppe ausgewählt ist.

4. Süßstoff nach Anspruch 1, dadurch gekennzeichnet, daß
$R_1$ aus der von $CH_3$ und $C_2H_5$ gebildeten Gruppe ausgewählt ist;
$R_2$ H oder $CH_3$ ist;
$R_3$ aus der von $CH_3(CH_2)_3$, $CH_3(CH_2)_4$, c-$C_6H_{11}O$ oder $C_6H_5O$ gebildeten Gruppe ausgewählt ist.

5. Süßstoff nach einem der vorstehenden Ansprüche, dadurch gekennzeichnet, daß die Acylgruppe R ein Rest mit der Konfiguration ist

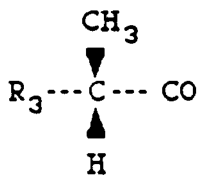

worin $R_3$ wie vorstehend definiert ist.

6. Süßstoff nach einem der vorstehenden Ansprüche, dadurch gekennzeichnet, daß n gleich 2 ist.

7. Süßstoff nach einem der vorstehenden Ansprüche, dadurch gekennzeichnet, daß R' ein Rest der Formel ist

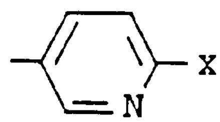

worin X wie vorstehend definiert ist.

8. Süßstoff nach einem der vorstehenden Ansprüche, dadurch gekennzeichnet, daß n gleich 2 ist und R' ein Rest der Formel ist

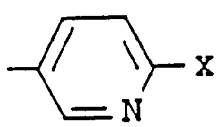

worin X wie vorstehend definiert ist.

9. Süßstoff nach einem der vorstehenden Ansprüche, dadurch gekennzeichnet, daß X eine CN-Gruppe ist.

10. Süßstoff nach einem der vorstehenden Ansprüche, dadurch gekennzeichnet, daß er in Form eines Natrium-, Kalium-, Ammonium-, Calcium- oder Magnesiumsalzes vorliegt.

11. Süßstoff nach Anspruch 1, dadurch gekennzeichnet, daß er der Formel entspricht,

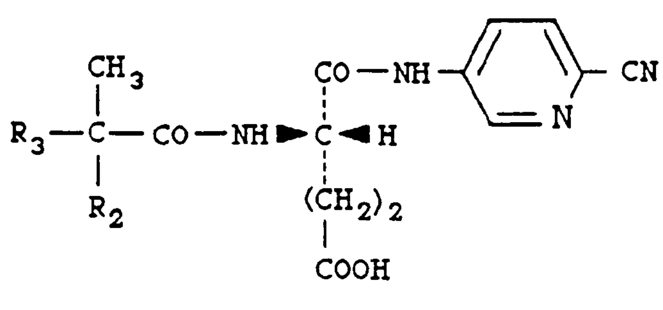

worin $R_2$ H oder $CH_3$ ist und $R_3$ wie vorstehend definiert ist.

**12.** Süßstoff nach Anspruch 11, dadurch gekennzeichnet, daβ $R_3$ eine n-Butylgruppe ist.

**13.** Süßstoff nach Anspruch 11, dadurch gekennzeichnet, daß $R_3$ eine Phenoxygruppe ist.

**14.** Süßstoff nach Anspruch 11, dadurch gekennzeichnet, daß es sich um N-[(S)-2-Methylhexanoyl]-alpha-L-glutamyl-5-amino-2-pyridincarbonitril handelt.

**15.** Süßstoff nach Anspruch 11, dadurch gekennzeichnet, daß es sich um N-(2,2-Dimethylhexanoyl)-alpha-L-glutamyl-5-amino-2-pyridincarbonitril handelt.

**16.** Süßstoff nach Anspruch 11, dadurch gekennzeichnet, daß es sich um N-[(R)-2-Phenoxypropanoyl]-alpha-L-glutamyl-5-amino-2-pyridincarbonitril handelt.

**17.** Verfahren zur Herstellung eines Süßstoffes nach Anspruch 1, dadurch gekennzeichnet, daß es, in beliebiger Reihenfolge, die Reaktion einschließt zwischen
einerseits L-Aspartinsäure oder L-Glutaminsäure, deren jeweilige β- oder gamma-Carboxylgruppe gegebenenfalls geschützt ist und
andererseits
- einer Säure der Formel

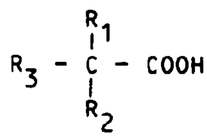

oder ihrem Säurechlorid;
- sowie einem Amin der Formel $H_2N$-R';
  wobei $R_1$, $R_2$, $R_3$ und R' wie in Anspruch 1 definiert sind;

auf eine Weise, daß zwei Amidbindungen an den α-Amino- und α-Carboxylgruppen der L-Aspartin- oder L-Glutaminsäure gebildet werden;
und gegebenenfalls die Umwandlung des so erhaltenen Produkts in ein physiologisch annehmbares Salz, etwa ein Natrium-, Kalium-, Ammonium-, Calcium- oder Magnesiumsalz.

**18.** Verfahren nach Anspruch 17, dadurch gekennzeichnet, daß der vorläufige Schutz der β-Carboxylgruppe der L-Aspartinsäure oder der gamma-Carboxylgruppe der L-Glutaminsäure durch Bildung
- eines Esters, insbesondere eines tert-Butylesters oder eines Benzylesters oder
- eines Anhydrids der Formel

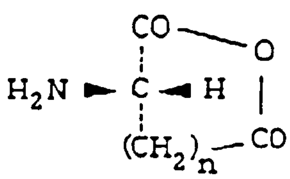

deren Aminogruppe gegebenenfalls in ein Salz umgewandelt oder geschützt ist, realisiert wird.

**19.** Verfahren nach Anspruch 17, dadurch gekennzeichnet, daß es
a) die Reaktion von L-Aspartinsäure oder L-Glutaminsäure mit einem Amin der Formel (III) zur Herstellung eines Aminoderivats der Formel (II) gemäß der Reaktionsgleichung

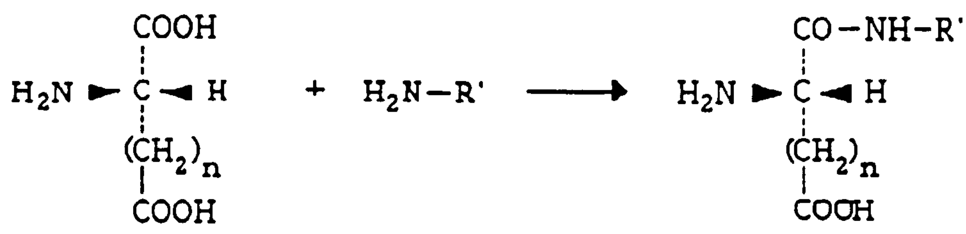

(III) (II)

(n = 1 oder 2)

b) die Reaktion des im Schritt (a) erhaltenen Aminoderivates II mit einem Säurechlorid der Formel (IV) gemäß der Reaktionsgleichung

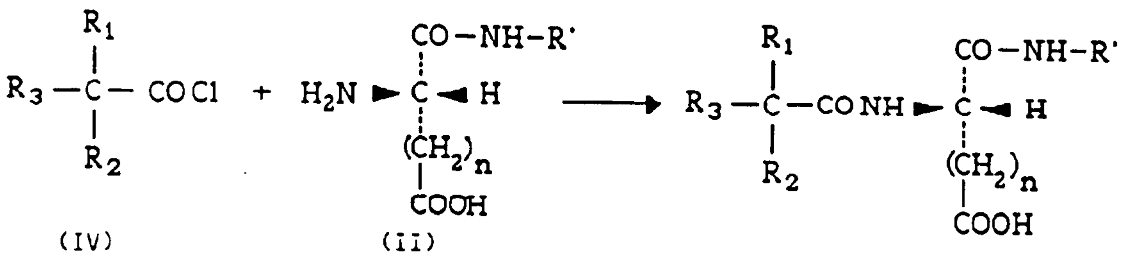

(IV) (II)

umfaßt.

**20.** Verfahren nach Anspruch 17, dadurch gekennzeichnet, daß es umfaßt

a) die Reaktion von L-Aspartinsäure oder L-Glutaminsäure mit einem Chlorid der Formel (IV) nach der Reaktionsgleichung

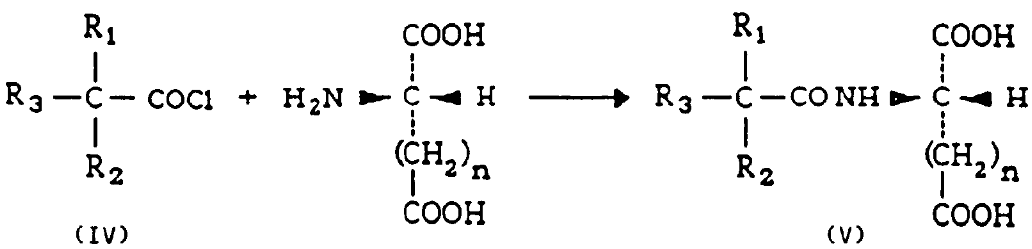

(IV) (V)

(n = 1 oder 2)

b) die Reaktion zwischen dem so erhaltenen Derivat (V) und einem Amin der Formel (III) nach der Reaktionsgleichung

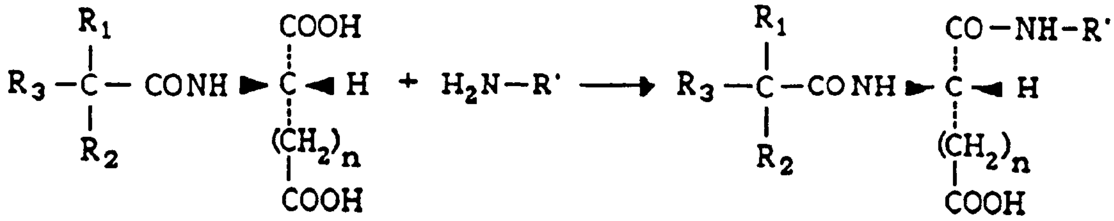

(V) (III)

wobei es sich versteht, daß die β-Carboxylgruppe der L-Aspartinsäure oder die gamma-Carboxylgruppe der L-Glutaminsäure gegebenenfalls vor der Reaktion a) geschützt wird und nach der Reaktion b) von der Schutzgruppe befreit wird.

**Patentansprüuche für folgenden Vertragsstaat : ES**

1. Süßstoff der allgemeinen Formel

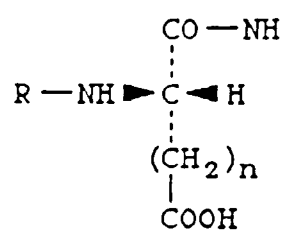

(I)

worin
R eine Acylgruppe der Formel ist

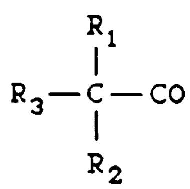

worin $R_1$ ein Methyl-, Ethyl-, Propyl-, Isopropyl-, Phenyl-, Methoxy-, Ethoxy-, Trihalogenmethyl-, Chlor- oder Chlormethylrest ist;
$R_2$ ein Wasserstoffatom oder ein Methyl-, Ethyl-, oder Methoxyrest ist;
oder auch worin $R_1$ und $R_2$ zusammen mit dem Kohlenstoffatom, an das sie gebunden sind, eine Cycloalkylgruppe mit 3 bis 6 Kohlenstoffatomen bilden;
$R_3$ ein Alkylrest mit 3 bis 11 Kohlenstoffatomen, ein Alkenylrest mit 3 bis 7 Kohlenstoffatomen, ein Cycloalkylrest mit 3 bis 7 Kohlenstoffatomen, ein Cycloalkylalkylrest, dessen Cycloalkylteil 3 bis 6 Kohlenstoffatome aufweist und dessen Alkylteil 1 bis 3 Kohlenstoffatome aufweist, ein Phenylrest, ein Phenylalkylrest, dessen Alkylteil 1 bis 3 Kohlenstoffatome aufweist, ein Alkoxyrest mit 3 bis 10 Kohlenstoffatomen, ein Cycloalkyloxyrest mit 3 bis 6 Kohlenstoffatomen, dessen zwei an den Kohlenstoff 1, der an den Sauerstoff gebunden ist, angrenzende Positionen jede durch 1 oder 2 Methylgruppen substituiert sein können, ein Cycloalkylalkoxyrest, dessen Cycloalkylteil 3 bis 6 Kohlenstoffatome aufweist und dessen Alkoxyteil 1 bis 3 Kohlenstoffatome aufweist, ein Phenoxyrest, ein Phenylalkoxyrest, dessen Alkoxyteil 1 bis 3 Kohlenstoffatome aufweist, ist;
n 1 oder 2 ist;
R' eine Gruppe der Formel ist

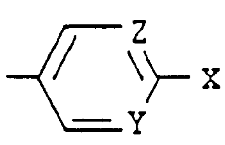

worin Y und Z, gleich oder verschieden, N oder CH darstellen und worin X aus der von CN, $NO_2$, Cl, $CF_3$, $COOCH_3$, $COCH_3$, $COCF_3$, $CONH_2$, $CON(CH_3)_2$, $SO_2CH_3$, $N_3$ oder H gebildeten Gruppe ausgewählt ist; sowie dessen physiologisch annehmbaren Salze.

2. Süßstoff nach Anspruch 1, dadurch gekennzeichnet, daß $R_1$ ein Methyl-, Ethyl-, Phenyl-, Methoxy-, Ethoxy-, Trifluormethyl-, Chlor- oder Chlormethylrest ist;

$R_2$ ein Wasserstoffatom oder ein Methyl- oder Ethylrest ist; oder auch worin $R_1$ und $R_2$ mit dem Kohlenstoffatom, an das sie gebunden sind, zusammen eine Cyclopropyl-, Cyclobutyl- oder Cyclopentylgruppe bilden;
$R_3$ ein geradkettiger Alkylrest mit 3 bis 5 Kohlenstoffatomen, ein verzweigter Alkylrest mit 3 bis 7 Kohlenstoffatomen, ein Alkenylrest mit 3 bis 7 Kohlenstoffatomen, ein Cycloalkylrest mit 3 bis 6 Kohlenstoffatomen, ein Cycloalkylmethyl- oder Cycloalkylethylrest, dessen Cycloalkylteil 3 bis 6 Kohlenstoffatome aufweist, ein Phenylrest, ein Phenylmethylrest, ein Phenylethyl- oder Phenylisopropylrest, ein Alkoxyrest mit 3 bis 6 Kohlenstoffatomen, ein Cycloalkyloxyrest mit 3 bis 6 Kohlenstoffatomen, ein Cycloalkylmethoxyrest, dessen Cycloalkylteil 3 bis 6 Kohlenstoffatome aufweist, ein Phenoxyrest, ein Phenylmethoxy- oder Phenylethoxyrest ist; und
n und R' wie zuvor definiert sind.

3. Süßstoff nach Anspruch 1, dadurch gekennzeichnet, daß $R_1$ aus der von $CH_3$, $C_2H_5$, $C_6H_5$ oder $CH_3O$ gebildeten Gruppe ausgewählt ist;
$R_2$ aus der von H oder $CH_3$ gebildeten Gruppe ausgewählt ist; oder auch daß $R_1$ und $R_2$ mit dem Kohlenstoffatom, an das sie gebunden sind, zusammen eine Cyclopropylgruppe bilden;
$R_3$ aus der von $CH_3(CH_2)_2$, $CH_3(CH_2)_3$, $CH_3(CH_2)_4$, $(CH_3)_2CH(CH_2)_2$, c-$C_6H_{11}$, c-$C_6H_{11}CH_2$, $C_6H_5$, $C_6H_5CH_2$, c-$C_6H_{11}O$ oder $C_6H_5O$ gebildeten Gruppe ausgewählt ist.

4. Süßstoff nach Anspruch 1, dadurch gekennzeichnet, daß $R_1$ aus der von $CH_3$ und $C_2H_5$ gebildeten Gruppe ausgewählt ist;
$R_2$ H oder $CH_3$ ist;
$R_3$ aus der von $CH_3(CH_2)_3$, $CH_3(CH_2)_4$, c-$C_6H_{11}O$ oder $C_6H_5O$ gebildeten Gruppe ausgewählt ist.

5. Süßstoff nach einem der vorstehenden Ansprüche, dadurch gekennzeichnet, daß die Acylgruppe R ein Rest mit der Konfiguration ist

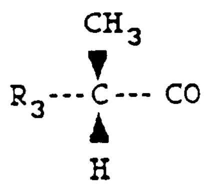

worin $R_3$ wie vorstehend definiert ist.

6. Süßstoff nach einem der vorstehenden Ansprüche, dadurch gekennzeichnet, daß n gleich 2 ist.

7. Süßstoff nach einem der vorstehenden Ansprüche, dadurch gekennzeichnet, daß R' ein Rest der Formel ist

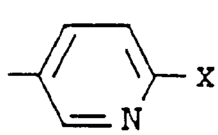

worin X wie vorstehend definiert ist.

8. Süßstoff nach einem der vorstehenden Ansprüche, dadurch gekennzeichnet, daß n gleich 2 ist und R' ein Rest der Formel ist

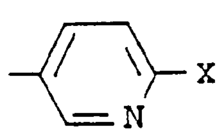

worin X wie vorstehend definiert ist.

9. Süßstoff nach einem der vorstehenden Ansprüche, dadurch gekennzeichnet, daß X eine CN-Gruppe ist.

10. Süßstoff nach einem der vorstehenden Ansprüche, dadurch gekennzeichnet, daß er in Form eines Natrium-, Kalium-, Ammonium-, Calcium- oder Magnesiumsalzes vorliegt.

11. Süßstoff nach Anspruch 1, dadurch gekennzeichnet, daß er der Formel entspricht,

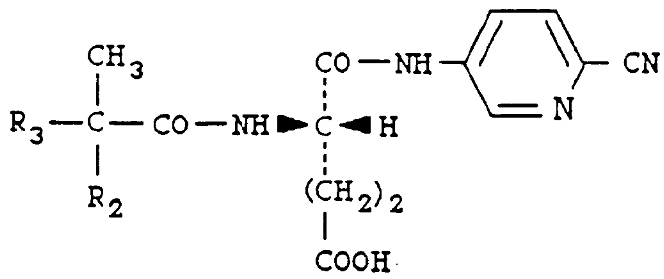

worin $R_2$ H oder $CH_3$ ist und $R_3$ wie vorstehend definiert ist.

12. Süßstoff nach Anspruch 11, dadurch gekennzeichnet, daß $R_3$ eine n-Butylgruppe ist.

13. Süßstoff nach Anspruch 11, dadurch gekennzeichnet, daß $R_3$ eine Phenoxygruppe ist.

14. Süßstoff nach Anspruch 11, dadurch gekennzeichnet, daß es sich um N-[(S)-2-Methylhexanoyl]-alpha-L-glutamyl-5-amino-2-pyridincarbonitril handelt.

15. Süßstoff nach Anspruch 11, dadurch gekennzeichnet, daß es sich um N-(2,2-Dimethylhexanoyl)-alpha-L-glutamyl-5-amino-2-pyridincarbonitril handelt.

16. Süßstoff nach Anspruch 11, dadurch gekennzeichnet, daß es sich um N-[(R)-2-Phenoxypropanoyl]-alpha-L-glutamyl-5-amino-2-pyridincarbonitril handelt.

17. Verfahren zur Herstellung eines Süßstoffs der allgemeinen Formel

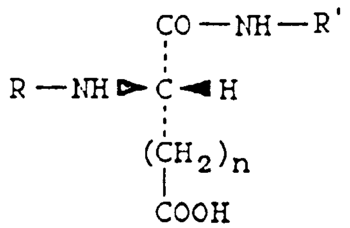

(I)

worin
R eine Acylgruppe der Formel ist

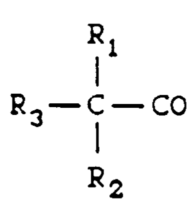

worin $R_1$ ein Methyl-, Ethyl-, Propyl-, Isopropyl-, Phenyl, Methoxy-, Ethoxy-, Trihalogenmethyl-, Chlor- oder Chlormethylrest ist;
$R_2$ ein Wasserstoffatom oder ein Methyl-, Ethyl- oder Methoxyrest ist;
oder auch worin $R_1$ und $R_2$ zusammen mit dem Kohlenstoffatom, an das sie gebunden sind, eine Cycloalkylgruppe mit 3 bis 6 Kohlenstoffatomen bilden;
$R_3$ ein Alkylrest mit 3 bis 11 Kohlenstoffatomen, ein Alkenylrest mit 3 bis 7 Kohlenstoffatomen, ein Cycloalkylrest mit 3 bis 7 Kohlenstoffatomen, ein Cycloalkylalkylrest, dessen Cycloalkylteil 3 bis 6 Kohlenstoffatome aufweist und dessen Alkylteil 1 bis 3 Kohlenstoffatome aufweist, ein Phenylrest, ein Phenylalkylrest, dessen Alkylteil 1 bis 3 Kohlenstoffatome aufweist, ein Alkoxyrest mit 3 bis 10 Kohlenstoffatomen, ein Cycloalkyloxyrest mit 3 bis 6 Kohlenstoffatomen, dessen zwei an den Kohlenstoff 1, der an den Sauerstoff gebunden ist, angrenzende Positionen jede durch 1 oder 2 Methylgruppen substituiert sein können, ein Cycloalkylalkoxyrest, dessen Cycloalkylteil 3 bis 6 Kohlenstoffatome aufweist und dessen Alkoxyteil 1 bis 3 Kohlenstoffatome aufweist, ein Phenoxyrest, ein Phenylalkoxyrest, dessen Alkoxyteil 1 bis 3 Kohlenstoffatome aufweist, ist;
n 1 oder 2 ist;
R' eine Gruppe der Formel ist

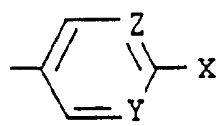

worin Y und Z, gleich oder verschieden, N oder CH darstellen und worin X aus der von CN, $NO_2$, Cl, $CF_3$, $COOCH_3$, $COCH_3$, $COCF_3$, $CONH_2$, $CON(CH_3)_2$, $SO_2CH_3$, $N_3$ oder H gebildeten Gruppe ausgewählt ist;
sowie seiner physiologisch annehmbaren Salze;
dadurch gekennzeichnet, daß es, in beliebiger Reihenfolge, die Reaktion einschliept zwischen
einerseits L-Aspartinsäure oder L-Glutaminsäure, deren jeweilige β- oder gamma-Carboxylgruppe gegebenenfalls geschützt ist, und
andererseits

- einer Säure der Formel

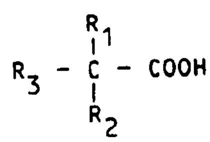

oder ihrem Säurechlorid;

- sowie einem Amin der Formel $H_2N\text{-}R'$;

wobei $R_1$, $R_2$, $R_3$ und R' wie in Anspruch 1 definiert sind; auf eine Weise, daß zwei Amidbindungen an den α-Amino- und α-Carboxylgruppen der L-Aspartin- oder L-Glutaminsäure gebildet werden;
und gegebenenfalls die Umwandlung des so erhaltenen Produkts in ein physiologisch annehmbares Salz, etwa ein Natrium-, Kalium-, Ammonium-, Calcium- oder Magnesiumsalz.

**18.** Verfahren nach Anspruch 17, dadurch gekennzeichnet, daß der vorläufige Schutz der β-Carboxylgruppe der L-Aspartinsäure oder der gamma-Carboxylgruppe der L-Glutaminsäure durch Bildung

- eines Esters, insbesondere eines tert-Butylesters oder eines Benzylesters oder
- eines Anhydrids der Formel

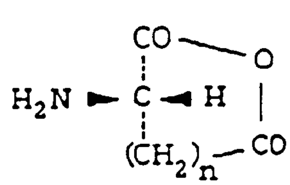

deren Aminogruppe gegebenenfalls in ein Salz umgewandelt oder geschützt ist, realisiert wird.

**19.** Verfahren nach Anspruch 17, dadurch gekennzeichnet, daß es
a) die Reaktion von L-Aspartinsäure oder L-Glutaminsäure mit einem Amin der Formel (III) zur Herstellung eines Aminoderivats der Formel (II) gemäß der Reaktionsgleichung

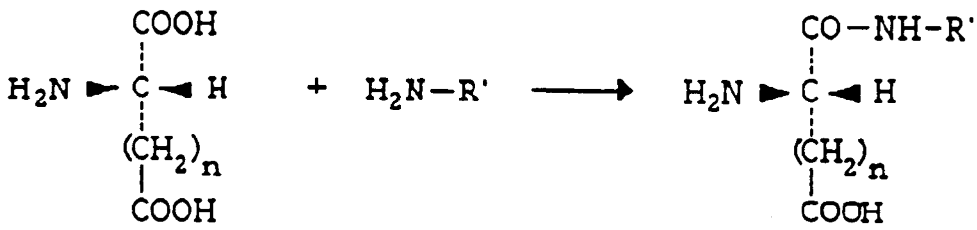

(III) (II)

b) die Reaktion des im Schritt (a) erhaltenen Aminoderivates II mit einem Säurechlorid der Formel (IV) gemäß der Reaktionsgleichung

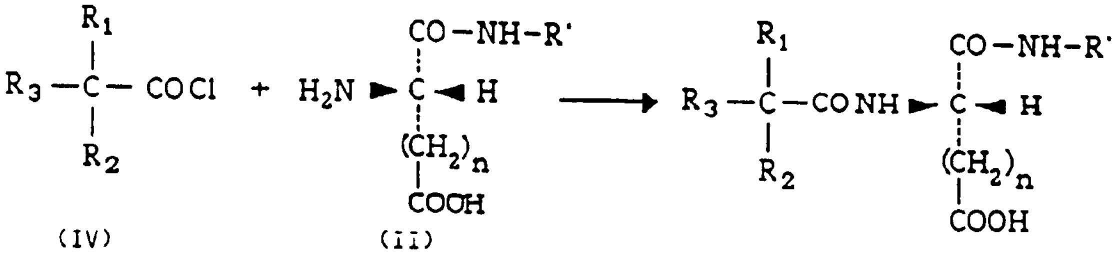

(IV) (II)

umfaßt.

**20.** Verfahren nach Anspruch 17, dadurch gekennzeichnet, daß es umfaßt
a) die Reaktion von L-Aspartinsäure oder L-Glutaminsäure mit einem Chlorid der Formel (IV) nach der Reaktionsgleichung

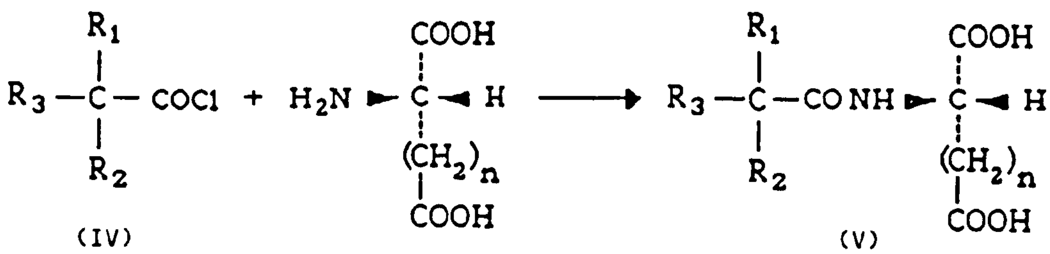

(IV) (V)

(n = 1 oder 2)

b) die Reaktion zwischen dem so erhaltenen Derivat (V) und einem Amin der Formel (III) nach der Reaktionsgleichung

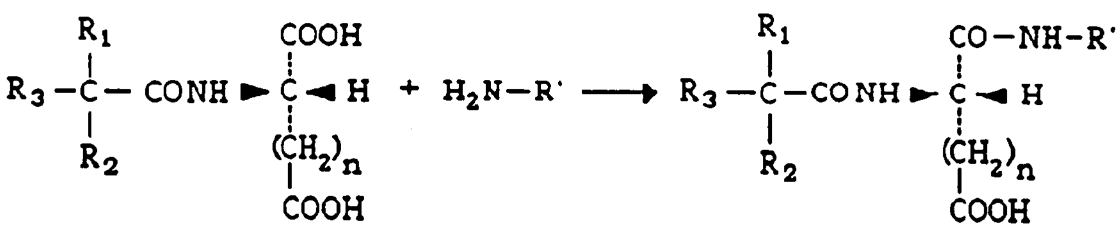

(V) (III)

wobei es sich versteht, daß die β-Carboxylgruppe der L-Aspartinsäure oder die gamma-Carboxylgruppe der L-Glutaminsäure gegebenenfalls vor der Reaktion a) geschützt wird und nach der Reaktion b) von der Schutzgruppe befreit wird.

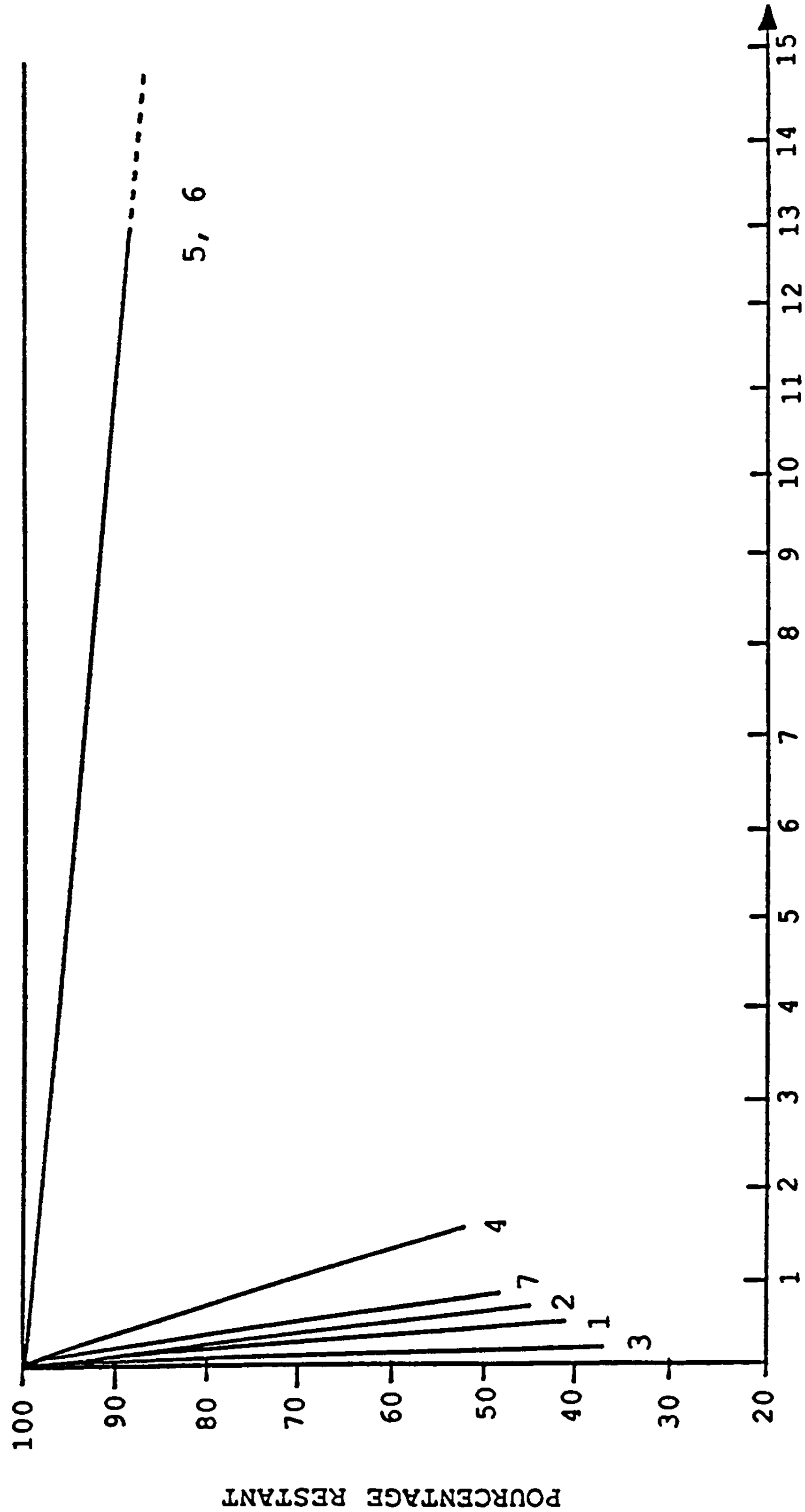


FIGURE 1 : STABILITE COMPAREE (pH 3, 70 °C)